# EUROPEAN PATENT APPLICATION

(11) **EP 3 068 167 A1**
(43) Date of publication of application: **14.09.2016**
(21) Application number: 14859683.6
(22) Date of filing: 05.11.2014
(51) Int. Cl.: H04W 28/24, H04W 84/18, H04W 88/04, H04W 92/18

(54) **COMMUNICATION CONTROL METHOD, RELAY TERMINAL APPARATUS, TERMINAL APPARATUS, BASE STATION APPARATUS, CONTROL APPARATUS, SERVER APPARATUS, AND MOBILE COMMUNICATION SYSTEM**

(30) Priority: 05.11.2013 JP 2013229113
(71) Applicant: Sharp Kabushiki Kaisha, Osaka-shi, Osaka 545-8522 (JP)
(72) Inventor: ENOMOTO, Masayuki, Osaka-shi, Osaka 545-8522 (JP); ARAMOTO, Masafumi, Osaka-shi, Osaka 545-8522 (JP)
(74) Representative: Müller-Boré & Partner Patentanwälte PartG mbB
(86) International application number: PCT/JP2014/079351
(87) International publication number: WO 2015/068732

(57) **Abstract**

To provide a communication control method of performing a QoS update procedure from a mobile communication network on communication terminals that perform direct communication.

A mobile communication provider can efficiently utilize the mobile communication network by performing the QoS update procedure on the communication terminals that perform the direct communication from the mobile communication network.

## Description

### Technical Field

The present invention relates to a communication control method, and a mobile communication system that includes a relay terminal apparatus, a terminal apparatus, a base station apparatus, a control apparatus, and a server apparatus.

### Background Art

In the 3rd Generation Partnership Project (3GPP) which is the standardization group for a mobile communication system, the specification work of Evolved Packet System (EPS) described in NPL 1 as the next generation mobile communication system has progressed, and a wireless LAN (WLAN) as well as Long Term Evolution (LTE) as an access system connected to the EPS has been examined.

In the 3GPP, as described in NPL 2, proximity-based services (ProSe) of performing communication by detecting user equipments (UEs) in proximity and establishing a direct communication path between proximity UEs have been examined. Here, the direct communication path between the UEs in the ProSe refers to a communication path through which data is directly transmitted and received between the proximity UEs without using a base station or a core network, whereas a communication path between UEs in the related art is established via a base station to which the UEs are connected or via a core network to which the base station is connected.

In the ProSe, communication is performed without using an access network including an LTE base station or a WLAN base station or a core network to which the access network is connected, and thus, an offload effect of avoiding (congestion avoidance) traffic concentration of the access network or the core network can be expected.

In the ProSe, the use of two methods as a direct communication path between the UEs has been examined. The first method is a method (hereinafter, referred to as LTE Direct) of establishing the direct communication path between the UEs using an LTE access technology, and the second method is a method of establishing the direct communication path using a wireless LAN access technology.

In the LTE Direct, the UE uses a commercial frequency allocated in an LTE system of each mobile communication provider, and directly transmits and receives data to and from another UE by using an LTE communication system.

In the WLAN Direct, the UE uses a non-commercial frequency allocated in the WLAN, and directly transmits and receives data to and from another UE.

In the ProSe, the necessity for the UE to detect the presence of a communication target UE in proximity by discovering the communication target UE in order to transmit and receive data through the LTE Direct or the WLAN Direct is given as a service request condition.

In order for the direct communication between the UEs to serve as a service provided by a mobile communication provider, the direct communication between the UEs is defined as requiring an approval of the mobile communication provider at the time of discovering the communication target UE.

As described above, the ProSe is used to define a communication service of performing communication by detecting the proximity UEs and establishing the direct communication path between the proximity UEs.

In the ProSe, non-Public Safety and Public Safety are defined. In the non-Public Safety, a commercial service provided by the mobile communication provider is assumed, and can be used only in a case where the UE is served in the LTE base station. Meanwhile, in the Public Safety, the use of a disaster prevention wireless system is assumed, and can be also used in a case where the UE is not served in the LTE base station (eNB) in addition to the case where the UE is served in the LTE base station.

It has been examined that the UE corresponding to the Public Safety performs relaying in addition to direct communication in the ProSe. In the 3GPP, UE-to-UE relay and UE-to-network relay have been examined. The UE-to-UE relay is a network form capable of performing the transmission and reception of data by using a relay UE between a communication source UE and a communication destination UE in order to perform the transmission and reception of data between the communication source UE and the communication destination UE in a case where it is difficult to perform the transmission and reception of data through direct communication. Here, the relay UE receives the data from the communication source UE, and transmits the data to the communication destination UE.

The UE-to-Network relay is a network form capable of allowing a UE present outside of coverage to perform the transmission and reception of data to and from a mobile communication network by using a relay UE served in the mobile communication network between the UEs in a case where the communication source UE is present outside of coverage from the network and is not able to directly perform communication via the mobile communication network. Here, the relay UE receives the data from the communication source UE present outside of coverage, and transmits the data to the mobile communication network. The relay UE receives the data from the mobile communication network, and transmits the data to the communication source UE present outside of coverage.

In the 3GPP, in communication using an eNB or EPS from the UE of the related art, Quality of Service (QoS) is secured. The QoS refers to communication quality related to contractor information or content of data to be delivered. The mobile communication provider can provide different communication quality required for each service by securing the QoS, and can efficiently operate the mobile communication network. In the 3GPP, it has been examined that the QoS is secured in the direct communication in the ProSe.

### Citation List

### Non Patent Literature

NPL 1: 3GPP TS23.401, Technical Specification Group Services and System Aspects, General Packet Radio Service (GPRS) enhancements for Evolved Universal Terrestrial Radio Access Network (E-UTRAN) access
NPL 2: 3GPP TR22.803, Technical Specification Group Services and System Aspects, Feasibility study for Proximity Services (ProSe)

### Summary of Invention

### Technical Problem

However, it is not possible to apply a method of securing the QoS in the related art to the direct communication in the ProSe. In a procedure of securing the QoS in the related art, a PGW/SGW does not manage a (radio) bearer in the direct communication between the UEs. An eNB does not manage a radio bearer in the direct communication between the UEs. The communication source UE and the communication destination do not manage a radio bearer in the direct communication in the UEs. In the UE-to-Network relay, the relay UE does not manage a radio bearer with the UE present outside of coverage.

Even though each of the PGW/SGW, MME, eNB, communication source UE, communication destination and relay UE which are described above manages the (radio) bearer in the direct communication, how to perform the procedure of securing the QoS for the bearer in the direct communication is not apparent.

It is necessary for the mobile communication network to perform the procedure of securing the QoS for the direct communication in the ProSe with as small a change as possible while providing the transmission and reception of data in the related art. Since there is no specific means for solving such problems, it is not possible to perform the procedure of securing the QoS for the direct communication between the communication source UE and the communication destination UE, and it is not possible to efficiently provide the ProSe service.

The present invention has been made in view of such circumstances, and it is an object of the invention to provide a mobile communication system for applying QoS to direct communication in the Prose.

### Solution to Problem

In order to solve the problems, a mobile communication system of the present invention is a mobile communication system that includes a packet data network gateway (PGW), a control apparatus, a base station apparatus, a relay terminal apparatus, and a terminal apparatus positioned in the proximity of the relay terminal apparatus, in which a communication path is established between the base station apparatus and the relay terminal apparatus, and in which a direct communication path is established between the relay terminal apparatus and the terminal apparatus. The PGW is configured to transmit a first request message for requesting to update communication quality, which does not include information indicating direct communication, in a case where there is a request to update communication quality for the communication path between the base station apparatus and the relay terminal apparatus, and transmit a first request message which includes the information indicating the direct communication in a case where there is a request to update communication quality for the direct communication path between the relay terminal apparatus and the terminal apparatus. The control apparatus is configured to receive the first request message, detect that there is a request to update the communication quality for the communication path between the base station apparatus and the relay terminal apparatus, and transmit a second request message for requesting to update communication quality, which does not include the information indicating the direct communication, to the base station apparatus, in a case where the information indicating the direct communication is not included in the request message, and detect that there is a request to update the communication quality for the direct communication path between the relay terminal apparatus and the terminal apparatus, and transmit a second request message for requesting to update communication quality, which includes the information indicating the direct communication, to the base station apparatus, in a case where the information indicating the direct communication is included in the first request message. The base station apparatus is configured to receive the second request message, detect that there is a request to update the communication quality for the communication path between the base station apparatus and the relay terminal apparatus, and transmit a third request message for requesting to update communication quality, which does not include the information indicating the direct communication, to the relay terminal apparatus, in a case where the information indicating the direct communication is not included in the second request message, and detect that there is a request to update the communication quality for the direct communication path between the relay terminal apparatus and the terminal apparatus, and transmit a third request message for requesting to update communication quality, which includes the information indicating the direct communication and information for selecting connection in a communication path, to the relay terminal apparatus, in a case where the information indicating the direct communication is included in the second request message. The relay terminal apparatus is configured to receive the third request message, detect that there is a request to update the communication quality for the communication path between the base station apparatus and the relay terminal apparatus, and update the communication quality for the communication path with the base station apparatus, in a case where the information indicating the direct communication is not included in the third request message, and detect that there is a request to update the communication quality for the direct communication path between the relay terminal apparatus and the terminal apparatus, and transmit a fourth request message for requesting to update communication quality, which includes an identifier for identifying connection in a direct communication path and information regarding communication quality, to the terminal apparatus, in a case where the information indicating the direct communication is included in the third request message.

A relay terminal apparatus of the present invention is a relay terminal apparatus in a mobile communication system that includes a PGW, a control apparatus, a base station apparatus, the relay terminal apparatus, and a terminal apparatus positioned in the proximity of the relay terminal apparatus, and in which a direct communication path is established between the relay terminal apparatus and the terminal apparatus. The relay terminal apparatus is configured to receive a request message for requesting to update the communication quality from the base station apparatus, detect that there is a request to update communication quality for a communication path between the base station apparatus and the relay terminal apparatus, and update the communication quality for the communication path with the base station apparatus, in a case where information indicating direct communication is not included in the request message, and detect that there is a request to update communication quality for the direct communication path between the relay terminal apparatus and the terminal apparatus, and transmit a request message for requesting to update communication quality, which includes an identifier for identifying connection in a direct communication path and information regarding communication quality, to the terminal apparatus, in a case where the information indicating the direct communication is included in the request message.

A terminal apparatus of the present invention is a terminal apparatus in a mobile communication system that includes a PGW, a control apparatus, a base station apparatus, a relay terminal apparatus, and the terminal apparatus positioned in the proximity of the relay terminal apparatus, and in which a direct communication path is established between the relay terminal apparatus and the terminal apparatus. The terminal apparatus is configured to: receive a request message for requesting to update communication quality, which includes an identifier for identifying connection in a direct communication path and information indicating communication quality, from the relay terminal apparatus; and update communication quality for the direct communication path with the terminal apparatus based on the request message.

A base station apparatus of the present invention is a base station apparatus in a mobile communication system that includes a PGW, a control apparatus, the base station apparatus, a relay terminal apparatus, and a terminal apparatus positioned in the proximity of the relay terminal apparatus, and in which a direct communication path is established between the relay terminal apparatus and the terminal apparatus. The base station apparatus is configured to: receive a request message for requesting to update communication quality from the control apparatus; detect that there is a request to update communication quality for a communication path between the base station apparatus and the relay terminal apparatus, and transmit a request message for requesting to update communication quality, which does not include the information indicating the direct communication, to the relay terminal apparatus, in a case where information indicating direct communication is not included in the request message; and detect that there is a request to update communication quality for the direct communication path between the relay terminal apparatus and the terminal apparatus, and transmit a request message for requesting to update communication quality, which includes the information indicating the direct communication and information for selecting communication quality, and includes the information indicating the direct communication, and an identifier for identifying connection in a direct communication path and information for selecting connection in a communication path, to the relay terminal apparatus, in a case where the information indicating the direct communication is included in the request message.

A control apparatus of the present invention is a control apparatus in a mobile communication system that includes a PGW, the control apparatus, a base station apparatus, a relay terminal apparatus, and a terminal apparatus positioned in the proximity of the relay terminal apparatus, and in which a direct communication path is established between the relay terminal apparatus and the terminal apparatus. The control apparatus is configured to: receive a request message for requesting to update communication quality from the PGW; detect that there is a request to update communication quality for a communication path between the base station apparatus and the relay terminal apparatus, and transmit a request message for requesting to update communication quality, which does not include the information indicating the direct communication, to the base station apparatus, in a case where information indicating direct communication is not included in the request message; and detect that there is a request to update communication quality for the direct communication path between the relay terminal apparatus and the terminal apparatus, and transmit a request message for requesting to update communication quality, which includes the information indicating the direct communication, to the base station apparatus, in a case where the information indicating the direct communication is included in the request message.

A communication control method of the present invention is a communication control method for causing a relay terminal apparatus to update communication quality of the relay terminal apparatus and a terminal apparatus positioned in the proximity of the relay terminal apparatus. The method includes: a step of causing the relay terminal apparatus to receive a request message for requesting to update communication quality from a base station apparatus, a step of causing the relay terminal apparatus to detect that there is a request to update communication quality for a communication path between the base station apparatus and the relay terminal apparatus, and to update the communication quality for the communication path with the base station apparatus, in a case where information indicating direct communication is not included in the request message; and a step of causing the relay terminal apparatus to detect that there is a request to update communication quality for the direct communication path between the relay terminal apparatus and the terminal apparatus, and to transmit a request message for requesting to update communication quality, which includes the information indicating the direct communication, an identifier for identifying connection in a direct communication path and information for selecting connection in a communication path, to the terminal apparatus, in a case where the information indicating the direct communication is included in the request message.

A communication control method of the present invention is a communication control method for causing a terminal apparatus to update communication quality of the terminal apparatus and a relay terminal apparatus positioned in the proximity of the terminal apparatus. The method includes: a step of receiving a request message for requesting to update communication quality, which include an identifier for identifying connection in a direct communication path and information indicating communication quality, from the relay terminal apparatus; and a step of updating communication quality for a direct communication path with the terminal apparatus based on the request message.

A communication control method of the present invention is a communication control method for causing a base station apparatus to update communication quality of a terminal apparatus and a relay terminal apparatus positioned in the proximity of the terminal apparatus. The method includes: a step of causing the base station apparatus to receive a request message for requesting to update communication quality from a control apparatus; a step of causing the base station apparatus to detect that there is a request to update communication quality for a communication path between the base station apparatus and the relay terminal apparatus, and to transmit a request message for requesting to update communication quality, which does not include the information indicating the direct communication, to the relay terminal apparatus, in a case where information indicating direct communication is not included in the request message; and a step of causing the base station apparatus to detect that there is a request to update communication quality for a direct communication path between the relay terminal apparatus and the terminal apparatus, and to transmit a request message for requesting to update communication quality, which includes the information indicating the direct communication, an identifier for identifying connection in a direct communication path and information for selecting connection in a communication path, to the relay terminal apparatus, in a case where the information indicating the direct communication is included in the request message.

A communication control method of the present invention is a communication control method for causing a control apparatus to update communication quality of a terminal apparatus and a relay terminal apparatus positioned in the proximity of the terminal apparatus. The method includes: a step of causing the control apparatus to receive a request message for requesting to update communication quality from a PGW; a step of causing the control apparatus to detect that there is a request to update communication quality for a communication path between a base station apparatus and the relay terminal apparatus, and to transmit a request message for requesting to update communication quality, which does not include information indicating direct communication, to the base station apparatus, in a case where the information indicating the direct communication is not included in the request message; and a step of causing the control apparatus to detect that there is a request to update communication quality for a direct communication path between the relay terminal apparatus and the terminal apparatus, and to transmit a request message for requesting to update communication quality, which includes the information indicating the direct communication, to the base station apparatus, in a case where the information indicating the direct communication is included in the request message.

A mobile communication system of the present invention is a mobile communication system that includes a packet data network gateway (PGW), a control apparatus, a base station apparatus, a relay terminal apparatus, and a terminal apparatus positioned in the proximity of the relay terminal apparatus, in which a communication path is established between the base station apparatus and the relay terminal apparatus, and in which a direct communication path is established between the relay terminal apparatus and the terminal apparatus. The PGW is configured to transmit a first request message for requesting to update communication quality, which does not include information indicating direct communication, in a case where there is a request to update communication quality for the communication path between the base station apparatus and the relay terminal apparatus, and transmit a first request message for requesting to update communication quality, which includes the information indicating the direct communication, in a case where there is a request to update communication quality for the direct communication path between the relay terminal apparatus and the terminal apparatus. The control apparatus is configured to receive the first request message, and detect that there is a request to update communication quality for the direct communication path between the relay terminal apparatus and the terminal apparatus, and transmit a second request message for requesting to update communication quality, which includes the information indicating the direct communication, an identifier for identifying connection in a direct communication path, information regarding communication quality and information for selecting connection in a communication path, to the relay terminal apparatus, in a case where the information indicating the direct communication is included in the request message. The relay terminal apparatus is configured to receive the second request message, detect that there is a request to update communication quality for the communication path between the base station apparatus and the relay terminal apparatus, and update the communication quality for the communication path with the base station apparatus, in a case where the information indicating the direct communication is not included in the second request message, and detect that there is a request to update communication quality for the direct communication path between the relay terminal apparatus and the terminal apparatus, and transmit a request message for requesting to update communication quality, which includes an identifier for identifying connection in a direct communication path and information regarding communication quality, to the terminal apparatus, in a case where the information indicating the direct communication is included in the second request message.

A relay terminal apparatus of the present invention is a relay terminal apparatus in a mobile communication system that includes a PGW, a control apparatus, a base station apparatus, the relay terminal apparatus, and a terminal apparatus positioned in the proximity of the relay terminal apparatus, and in which a direct communication path is established between the relay terminal apparatus and the terminal apparatus. The relay terminal apparatus is configured to: receive a request message for requesting to update communication quality from the control apparatus; detect that there is a request to update communication quality for a communication path between the base station apparatus and the relay terminal apparatus, and update the communication quality for the communication path with the base station apparatus, in a case where information indicating direct communication is not included in the request message; and detect that there is a request to update communication quality for the direct communication path between the relay terminal apparatus and the terminal apparatus, and transmit a request message for requesting to update communication quality, which includes an identifier for identifying connection in a direct communication path and information regarding communication quality, to the terminal apparatus, in a case where the information indicating the direct communication is included in the request message.

A control apparatus of the present invention is a control apparatus in a mobile communication system that includes a PGW, the control apparatus, a base station apparatus, a relay terminal apparatus, and a terminal apparatus positioned in the proximity of the relay terminal apparatus, and in which a direct communication path is established between the relay terminal apparatus and the terminal apparatus. The control apparatus is configured to: receive a request message for requesting to update communication quality from the PGW; detect that there is a request to update communication quality for a communication path between the base station apparatus and the relay terminal apparatus, and transmit a request message for requesting to update communication quality, which does not include information indicating direct communication, to the relay terminal apparatus, in a case where the information indicating the direct communication is not included in the request message; and detect that there is a request to update communication quality for the direct communication path between the relay terminal apparatus and the terminal apparatus, and transmit a request message for requesting to update communication quality, which includes the information indicating the direct communication, to the terminal apparatus, in a case where the information indicating the direct communication is included in the request message.

A communication control method of the present invention is a communication control method for causing a relay terminal apparatus to update communication quality of the relay terminal apparatus and a terminal apparatus positioned in the proximity of the relay terminal apparatus. The method includes: a step of causing the relay terminal apparatus to receive a request message for requesting to update communication quality from a control apparatus; a step of causing the relay terminal apparatus to detect that there is a request to update communication quality for a communication path between a base station apparatus and the relay terminal apparatus, and to update the communication quality for the communication path with the base station apparatus, in a case where information indicating direct communication is not included in the request message; and a step of causing the relay terminal apparatus to detect that there is a request to update communication quality for a direct communication path between the relay terminal apparatus and the terminal apparatus, and to transmit a request message for requesting to update communication quality, which includes an identifier for identifying connection in a direct communication path and information regarding communication quality, to the terminal apparatus, in a case where the information indicating the direct communication is included in the request message.

A communication control method of the present invention is a communication control method for causing a control apparatus to update communication quality of a terminal apparatus and a relay terminal apparatus positioned in the proximity of the terminal apparatus. The method includes: a step of causing the control apparatus to receive a request message for requesting to update communication quality from a PGW; a step of causing the control apparatus to detect that there is a request to update communication quality for a communication path between a base station apparatus and the relay terminal apparatus, and to transmit a request message for requesting to update communication quality, which does not include information indicating direct communication, to the relay terminal apparatus, in a case where the information indicating the direct communication is not included in the request message; and a step of causing the control apparatus to detect that there is a request to update communication quality for a direct communication path between the relay terminal apparatus and the terminal apparatus, and to transmit a request message for requesting to update communication quality, which includes the information indicating the direct communication, to the base station apparatus, in a case where the information indicating the direct communication is included in the request message.

A mobile communication system of the present invention is a mobile communication system that includes an HSS, a control apparatus, a base station apparatus, a relay terminal apparatus, and a terminal apparatus positioned in the proximity of the relay terminal apparatus, in which a communication path is established between the base station apparatus and the relay terminal apparatus, and in which a direct communication path is established between the relay terminal apparatus and the terminal apparatus. The HSS is configured to transmit a notification message for notifying of the insertion of contractor data. The control apparatus is configured to receive the notification message, detect that there is a request to update communication quality for the communication path between the base station apparatus and the relay terminal apparatus, and transmit a first request message for requesting to update communication quality, which does not include the information indicating the direct communication, to the base station apparatus, in a case where information indicating direct communication is not included in the notification message, and detect that there is a request to update communication quality for the direct communication path between the relay terminal apparatus and the terminal apparatus, and transmit a first request message for requesting to update communication quality, which includes the information indicating the direct communication, to the base station apparatus, in a case where the information indicating the direct communication is included in the notification message. The base station apparatus is configured to receive the first request message, detect that there is a request to update communication quality for the communication path between the base station apparatus and the relay terminal apparatus, and transmit a second request message for requesting to update communication quality, which does not include the information indicating the direct communication, to the relay terminal apparatus, in a case where the information indicating the direct communication is not included in the first request message, and detect that there is a request to update communication quality for the direct communication path between the relay terminal apparatus and the terminal apparatus, and transmit a second request message for requesting to update communication quality, which includes the information indicating the direct communication, an identifier for identifying connection in a direct communication path and information for selecting connection in a communication path, to the relay terminal apparatus, in a case where the information indicating the direct communication is included in the first request message. The relay terminal apparatus is configured to receive the second request message, detect that there is a request to update communication quality for the communication path between the base station apparatus and the relay terminal apparatus, and update the communication quality for the communication path with the base station apparatus, in a case where the information indicating the direct communication is not included in the second request message, and detect that there is a request to update communication quality for the direct communication path between the relay terminal apparatus and the terminal apparatus, and transmit a third request message for requesting to update communication quality, which includes an identifier for identifying connection in a direct communication path and information regarding communication quality, to the terminal apparatus, in a case where the information indicating the direct communication is included in the second request message.

A control apparatus of the present invention is a control apparatus in a mobile communication system that includes an HSS, the control apparatus, a base station apparatus, a relay terminal apparatus, and a terminal apparatus positioned in the proximity of the relay terminal apparatus, and in which a direct communication path is established between the relay terminal apparatus and the terminal apparatus. The control apparatus is configured to: receive a request message for requesting to update communication quality from the HSS; detect that there is a request to update communication quality for a communication path between the base station apparatus and the relay terminal apparatus, and transmit a request message for requesting to update communication quality, which does not include information indicating direct communication, to the base station apparatus, in a case where the information indicating the direct communication is not included in the request message; and detect that there is a request to update communication quality for the direct communication path between the relay terminal apparatus and the terminal apparatus, and transmit a request message for requesting to update communication quality, which includes the information indicating the direct communication, to the base station apparatus, in a case where the information indicating the direct communication is included in the request message.

A communication control method of the present invention is a communication control method for causing a control apparatus to update communication quality of a terminal apparatus and a relay terminal apparatus positioned in the proximity of the terminal apparatus. The method includes: a step of causing the control apparatus to receive a request message for requesting to update communication quality from an HSS; a step of causing the control apparatus to detect that there is a request to update communication quality for a communication path between a base station apparatus and the relay terminal apparatus, and to transmit a request message for requesting to update communication quality, which does not include information indicating direct communication, to the relay terminal apparatus, in a case where the information indicating the direct communication is not included in the request message; and a step of causing the control apparatus to detect that there is a request to update communication quality for a direct communication path between the relay terminal apparatus and the terminal apparatus, and to transmit a request message for requesting to update communication quality, which includes the information indicating the direct communication, to the base station apparatus, in a case where the information indicating the direct communication is included in the request message.

A mobile communication system of the present invention is a mobile communication system that includes a server apparatus for providing a direct communication service, a control apparatus, a base station apparatus, a relay terminal apparatus, and a terminal apparatus positioned in the proximity of the relay terminal apparatus, in which a communication path is established between the base station apparatus and the relay terminal apparatus, and in which a direct communication path is established between the relay terminal apparatus and the terminal apparatus. The server apparatus is configured to transmit a first request message for requesting to update communication quality. The control apparatus is configured to receive the first request message, and detect that there is a request to update communication quality for the direct communication path between the relay terminal apparatus and the terminal apparatus, and transmit a second request message for requesting to update communication quality, which includes information indicating direct communication, to the base station apparatus. The base station apparatus is configured to receive the second request message, detect that there is a request to update communication quality for the communication path between the base station apparatus and the relay terminal apparatus, and transmit a third request message for requesting to update communication quality, which does not include the information indicating the direct communication, to the relay terminal apparatus, in a case where the information indicating the direct communication is not included in the second request message, and detect that there is a request to update communication quality for the direct communication path between the relay terminal apparatus and the terminal apparatus, and transmit a third request message for requesting to update communication quality, which includes the information indicating the direct communication and information for selecting connection in a communication path, to the relay terminal apparatus, in a case where the information indicating the direct communication is included in the second request message. The relay terminal apparatus is configured to receive the third request message, detect that there is a request to update communication quality for the communication path between the base station apparatus and the relay terminal apparatus, and update the communication quality for the communication path with the base station apparatus, in a case where the information indicating the direct communication is not included in the third request message, and detect that there is a request to update communication quality for the direct communication path between the relay terminal apparatus and the terminal apparatus, and transmit a request message for requesting to update communication quality, which includes an identifier for identifying connection in a direct communication path and information regarding communication quality, to the terminal apparatus, in a case where the information indicating the direct communication is included in the third request message.

A control apparatus of the present invention is a control apparatus in a mobile communication system that includes a server apparatus for providing a direct communication service, the control apparatus, a base station apparatus, a relay terminal apparatus, and a terminal apparatus positioned in the proximity of the relay terminal apparatus, and in which a direct communication path is established between the relay terminal apparatus and the terminal apparatus. The control apparatus is configured to: receive a request message for requesting to update communication quality from the server apparatus; and detect that there is a request to update communication quality for the direct communication path between the relay terminal apparatus and the terminal apparatus, and transmit a request message for requesting to update communication quality, which includes information indicating direct communication, to the base station apparatus.

A server apparatus of the present invention is a server apparatus in a mobile communication system that includes a server apparatus for providing a direct communication service, a control apparatus, a base station apparatus, a relay terminal apparatus, and a terminal apparatus positioned in the proximity of the relay terminal apparatus, and in which a direct communication path is established between the relay terminal apparatus and the terminal apparatus. The server apparatus is configured to: transmit a request message for requesting to update communication quality from the control server in order to update communication quality.

A communication control method of the present invention is a communication control method for causing a control apparatus to update communication quality of a terminal apparatus and a relay terminal apparatus positioned in the proximity of the terminal apparatus. The method includes: a step of causing the control apparatus to receive a request message for requesting to update communication quality from a server apparatus; and a step of causing the control apparatus to detect that there is a request to update communication quality for a direct communication path between the relay terminal apparatus and the terminal apparatus, and to transmit a request message for requesting to update communication quality, which includes information indicating direct communication, to a base station apparatus.

A communication control method of the present invention is a communication control method for causing a server apparatus for providing a direct communication service to update communication quality of a terminal apparatus and a relay terminal apparatus positioned in the proximity of the terminal apparatus. The method includes: a step of causing the server apparatus to detect that it is necessary to update communication quality; and a step of causing the server apparatus to transmit a request message for requesting to update communication quality, which includes information indicating direct communication, to a control apparatus.

### Advantageous Effects of Invention

According to the present invention, a mobile communication provider can provide the transmission and reception of data in which a communication source UE and a communication destination UE secure QoS for direct communication in a ProSe. A PGW/SGW can manage a (radio) bearer in a direct communication path between UEs. An eNB can manage a radio bearer in direct communication between UEs. A communication source UE and a communication destination can manage a radio bearer in direct communication between UEs. A relay UE can manage a radio bearer with a UE present outside of coverage in a UE-to-Network relay.

Each of the PGW/SGW, MME, eNB, communication source UE, communication destination UE and relay UE manages the (radio) bearer in the direct communication, and can perform a procedure of securing QoS for the bearer of the direct communication.

A mobile communication network can perform a procedure of securing QoS for direct communication in the ProSe with as small a change as possible while providing the transmission and reception of data of the related art. Brief Description of Drawings

[Fig. 1] Fig. 1 is a diagram for describing the outline of a mobile communication system 1 according to a first embodiment.
[Fig. 2] Fig. 2 is a diagram for describing a functional structure of a UE according to the first embodiment.
[Fig. 3] Fig. 3 is a diagram showing an example of a functional structure managed in a storage unit of the UE.
[Fig. 4] Fig. 4 is a diagram for describing a functional structure of a UE-R according to the first embodiment.
[Fig. 5] Fig. 5 is a diagram showing an example of a functional structure managed in a storage unit of the UE-R.
[Fig. 6] Fig. 6 is a diagram for describing a functional structure of an eNB according to the first embodiment.
[Fig. 7] Fig. 7 is a diagram showing an example of a functional structure managed in a storage unit of the eNB.
[Fig. 8] Fig. 8 is a diagram for describing a functional structure of an MME according to the first embodiment.
[Fig. 9] Fig. 9 is a diagram showing an example of a functional structure managed in a storage unit of the MME.
[Fig. 10] Fig. 10 is a diagram for describing a functional structure of a PGW according to the first embodiment.
[Fig. 11] Fig. 11 is a diagram showing an example of a functional structure managed in a storage unit of the PGW.
[Fig. 12] Fig. 12 is a diagram for describing the relationship between identification information items managed in the respective apparatuses according to the first embodiment.
[Fig. 13] Fig. 13 is a diagram for describing a PDN connection establishing procedure according to the first embodiment.
[Fig. 14] Fig. 14 is a diagram for describing a QoS update procedure according to the first embodiment.
[Fig. 15] Fig. 15 is a diagram for describing the relationship between identification information items managed in the respective apparatuses according to a second embodiment.
[Fig. 16] Fig. 16 is a diagram for describing a QoS update procedure according to the second embodiment.
[Fig. 17] Fig. 17 is a diagram for describing a QoS update procedure according to a third embodiment.
[Fig. 18] Fig. 18 is a diagram for describing the outlines of a mobile communication system 2 and a mobile communication system 3 according to a fourth embodiment.
[Fig. 19] Fig. 19 is a diagram for describing a functional structure of a ProSe Server according to the fourth embodiment.
[Fig. 20] Fig. 20 is a diagram showing an example of a functional structure managed in a storage unit of the ProSe Server.
[Fig. 21] Fig. 21 is a diagram for describing a QoS update procedure according to the fourth embodiment. Description of Embodiments

Hereinafter, preferred embodiments for implementing the present invention will be described with reference to the drawings. In the present embodiment, embodiments of a mobile communication system to which the present invention applies as an example will be described in detail with reference to the drawings. Here, UE-to-Network relay refers to a network form in which a UE (a mobile station, a mobile station apparatus, or a terminal apparatus) which is present outside of coverage is connected to an eNB (an LTE base station apparatus, an LTE base station, a base station apparatus, or a base station) by being connected to a relay UE (a relay mobile station, a relay mobile station apparatus, or a relay terminal apparatus) which is present within coverage to connect a mobile communication network.

The apparatus being present within coverage represents a state in which the apparatus is served in the LTE base station (eNB), and refers to a state in which the apparatus can be connected to the mobile communication network by being connected to the LTE base station. Meanwhile, the apparatus being present outside of coverage represents a state in which the apparatus is not served in the LTE base station (eNB), and refers to a state in which the apparatus is not able to connect to the LTE base station, and is not able to directly connect the mobile communication network.

### [1. First embodiment]

Initially, a first embodiment to which the present invention applies will be described with reference to the drawings.

### [1.1 Outline of Mobile Communication System]

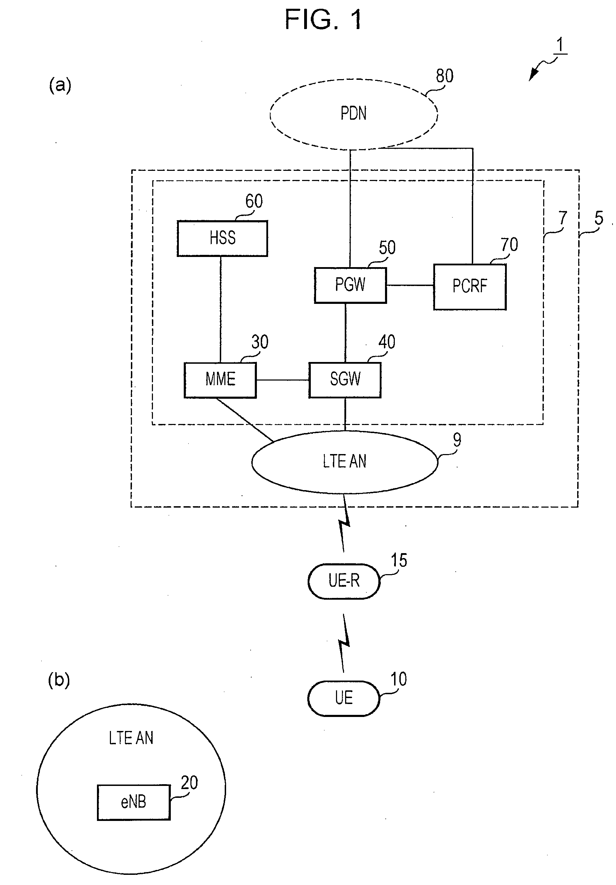

Fig. 1 is a diagram for describing the outline of a mobile communication system 1 according to the present embodiment. As shown in this drawing, the mobile communication system 1 includes a User Equipment (UE; a mobile station apparatus or a terminal apparatus) 10, a UE-R (a relay mobile station apparatus, a relay terminal apparatus or a relay mobile station) 15, an LTE access network (LTE AN) 9, a mobility management entity (MME) 30, a serving gateway (SGW) 40, a PDN Gateway (PGW) 50, a home subscriber server (HSS) 60, a Policy and Charging Reference Function (PCRF) 70, and a packet data network (PDN) 80. The LTE AN 9 includes one or a plurality of eNBs 20. A core network 7 includes the MME 30, the SGW 40, the PGW 50, the HSS 60, and the PCRF 70. A mobile communication network 5 includes the core network 7, and the LTE AN 9.

The UE 10 is not able to directly perform the transmission and reception of data from an eNB (evolved NodeB) 20 to the mobile communication network 5, but can perform the transmission and reception of data from the eNB 20 to the mobile communication network 5 through the UE-R 15. Here, the UR-R 15 can transmit data of the UE 10 to the mobile communication network 5, and can transmit data from the mobile communication network 5 to the UE 10 (UE-to-network relay).

The UE 10 is a communication terminal capable of performing direct communication in the ProSe by using an access system such as LTE or WLAN. The UE 10 is a communication terminal capable of being connected using an access system such as LTE or WLAN, and can be connected to the mobile communication network by being connected through the installing of a 3GPP LTE communication interface. The UE 10 can be connected to the mobile communication network from the eNB 20 through the UE-R 15. As a specific example, there is a portable phone terminal, a smart phone, a home appliance, a tablet computer or a personal computer having another communication function.

The UE-R 15 is a communication terminal capable of performing direct communication in the ProSe by using an access system such as LTE or WLAN. The UE-R 15 is a communication terminal capable of being connected using an access system such as LTE or WLAN, and can be connected to the mobile communication network by being connected while including a 3GPP LTE communication interface. The UE-R 15 can transmit data transmitted from the UE 10 to the mobile communication network from the eNB 20. The UE-R 15 can receive data from the eNB 20 via the mobile communication network, and can transmit the data to the UE 10. As a specific example, there is a portable phone terminal, a smart phone, a home appliance, a table computer or a personal computer having another communication function.

The eNB 20 is connected to the MME 30, the SGW 40, and the UE-R 15. The eNB 20 provides connection (of the SGW) to the mobile communication network to the UE-R 15 through an LTE access technology.

The serving gateway (SGW) 40 is a service control apparatus that is connected to the PGW 50 and the eNB 20, and performs packet transmission between the PGW 50 and the eNB 20.

The mobility management entity (MME) 30 is connected to the eNB 20, the SGW 40, and the HSS 60. The MME 30 is an apparatus that performs signaling, and a position management apparatus that performs the position management of the UE 10 and a process of establishing an EPS bearer. The EPS bearer refers to a logical path through which a user IP packet established between the eNB 20 and the SGW 40 (or the PGW 50) is transmitted to each UE (the UE 10 or the UE-R 15). The UE 10 or the UE-R 15 can establish a plurality of EPS bearers.

The PGW (packet data network (PDN) Gateway) 50 is connected to the SGW 40, the PCRF 70, and the PDN 80. The PGW 50 transmits data transmitted from the PDN 80 to the UE 10 by transmitting the data to the SGW 40. The PGW 50 transmits data transmitted from the SGW 40 to the PDN 80. The PGW 50 performs a procedure of updating QoS on the UE-R 15 served within coverage in response to a request from the PCRF 70.

The home subscriber server (HSS) 60 is connected to the MME 30. The HSS 60 manages contractor information such as a user, and notifies of the contractor information in response to a request from the MME 30. The HSS 60 can start the procedure of updating QoS according to the updating of the contractor information.

The Policy and Charging Reference Function (PCRF) 70 is connected to the PDN 80 and the PGW 50. The PCRF 70 refers to a function of managing changing information of the EPS bearer and QoS policy control information. The PCRF 70 can start the procedure of updating QoS on the PGW 50 in order to control QoS if necessary.

The packet data network (PDN) 80 is a network that provides a network service of transmitting and receiving data as a packet, and is, for example, the Internet or IMS. The PDN 80 is connected to an IP access network by using a wired line. For example, the PDN is constructed using an Asymmetric Digital Subscriber Line (ADSL) or an optical fiber. However, the PDN is not limited to the above-described example, and may be a wireless access network such as Long Term Evolution (LTE), wireless LAN (WLAN), or Worldwide Interoperability for Microwave Access (WiMAX).

### [1.2 Apparatus Structure]

Hereinafter, each apparatus structure will be briefly described with reference to the drawings. The SGW 40, the PCRF 70 and the HSS 60 have the same apparatus structures of the related art in the mobile communication system, and thus, the description thereof will be omitted.

### [1.2.1 Structure of UE]

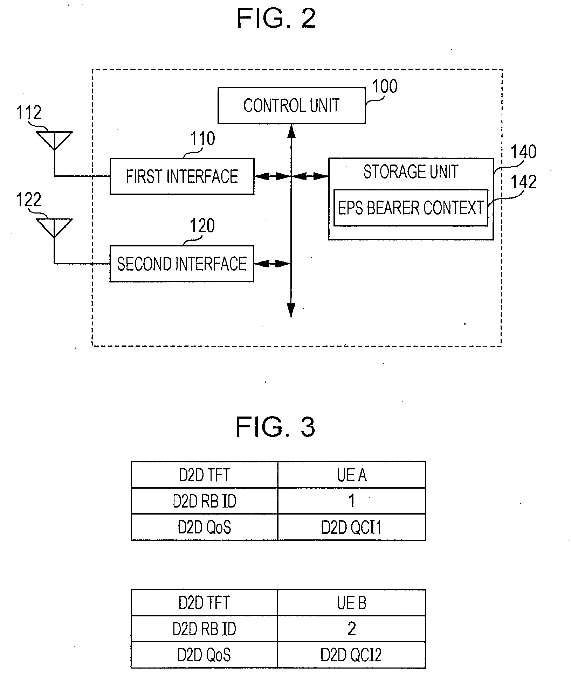

Fig. 2 shows a functional structure of the UE 10 according to the present embodiment. In the UE 10, a first interface 110, a second interface 120, and a storage unit 140 are connected to a control unit 100 through a bus.

The control unit 100 is a functional unit for controlling the UE 10. The control unit 100 realizes various processes by reading various programs stored in the storage unit 140 and executing the read programs.

The first interface 110 is a functional unit for performing the transmission and reception of data through wireless communication by an LTE access scheme. Here, the first interface 110 includes an LTE transmission unit, and an LTE reception unit. The LTE transmission can transmit data or control information through the LTE base station, and the LTE reception unit can transmit data or control information through the LTE base station. An external antenna 112 is connected to the first interface 110. The first interface transmits the data or control information through the LTE base station, and can receive the data or control information through the LTE base station. The UE 10 is connected to the mobile communication network (the MME 30, the SGW 40 or the PGW 50) by being connected to the LTE base station through the transmission and reception units, and can perform communication.

Here, the first interface 110 may separately include a transmission unit that transmits user data and control information which are application communication data, and a reception unit that receives user data and control information which are application communication data.

The second interface 120 is a functional unit capable of performing direct communication with another UE by using data or control information without using the LTE base station. The second interface 120 may be a functional unit that performs direct communication using the LTE access technology, or may be a functional unit that performs direct communication using the WLAN access technology. Here, the second interface 120 includes a direct transmission unit, and a direct reception unit. The direct transmission unit can transmit data or control information without using the LTE base station, and the direct reception unit can transmit data or control information without the LTE base station. An external antenna 122 is connected to the second interface 120, and thus, the direct transmission unit can transmit data or control information without using the LTE base station and the direct reception unit can receive data and control information without using the LTE base station. The external antenna 112 connected to the first interface 110 and the external antenna 122 connected to the second interface 120 may be used in common.

Here, the second interface 120 separately includes a transmission unit that transmits user data and control information which are application (APP) communication data, and a reception unit that receives user data and control information which are application (APP) communication data.

The first interface 110 and the second interface 120 may be realized as one transmission and reception unit, the transmission unit of the first interface 110 and the transmission unit of the second interface 120 may be realized as one transmission unit, or the reception unit of the first interface 110 and the reception unit of the second interface 120 may be realized as one reception unit.

The storage unit 140 is a functional unit that stores programs or data required in various operations of the UE 10. For example, the storage unit 140 is realized using a semiconductor memory, or a hard disk drive (HDD). An EPS bearer context 142 is stored in the storage unit 140.

Fig. 3 is a diagram showing an example of the EPS bearer context 142. In Fig. 3, a Direct-to-Direct (D2D) radio bearer (RB) ID, a D2D traffic flow template (TFT), and D2D Quality of Service (QoS) are included in the EPS bearer context 142.

The D2D RB ID is an identifier for identifying connection in a direct communication path between the UE 10 and the UE-R 15. Here, the connection in the direct communication path refers to a D2D radio bearer, and the D2D RB ID stores an identifier of the D2D radio bearer.

In a case where direct communication is performed, the UE 10 uses the D2D TFT, selects a D2D RB ID 145, and performs direct communication in the ProSe. The D2D RB ID is not necessarily the D2D RB ID, and may be an EPS RB ID or a relay RB ID.

The D2D TFT is associated with information regarding an application of the UE 10, a transmission source UE, a transmission destination UE, and the PGW 50, indicates a bearer (D2D RB ID) in which direct communication is performed depending on the information regarding the application, the transmission source UE or the transmission destination UE, and manages information for selecting connection in a communication path. A D2D TFT 146 is not necessarily the D2D TFT, and may be simply a TFT.

A D2D QoS 147 indicates QoS for each D2D RB ID 145. The UE 10 selects the D2D RB ID 145 by the D2D TFT 146, and performs direct communication in the ProSe by using the D2D QoS 147 corresponding to the selected D2D RB ID 145. The D2D QoS 147 is not necessarily the D2D QoS 147, and may be simply QoS.

The D2D TFT is a UE A, the D2D RB ID is 1, and the D2D QoS is D2D QCI1, and in a case where communication with the UE A is performed, 1 is selected for the D2D RB ID, and direct communication is performed in the D2D QCI1. Here, the D2D Quality Class Indicator (QCI) is information indicating QoS in the D2D, and indicates, for example, the maximum bit rate or the minimum bit rate.

Meanwhile, the D2D TFT is a UE B, the D2D RB ID is 2, and the D2D QoS is D2D QCI2, and in a case where communication with the UE B is performed, 2 is selected for the D2D RB ID, and direct communication is performed in the D2D QCI2. Here, the D2D TFT includes a UE identifier, but may be information regarding a UE. Not the information regarding the UE but Information regarding an application may be included, and the D2D TFT may be selected depending to the application. The information regarding the UE and the information regarding the application may be included, and the D2D TFT may be complexly selected.

### [1.2.2 Structure of UE-R]

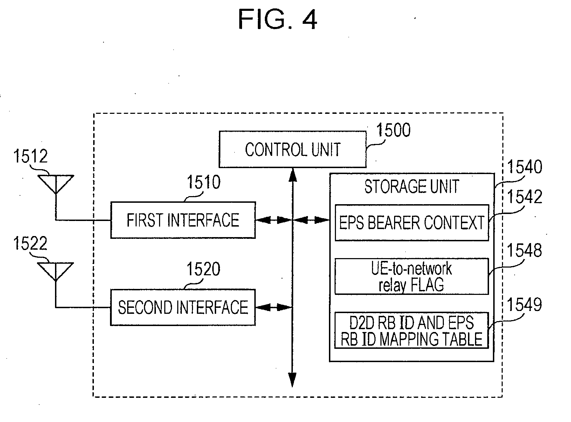

Fig. 4 shows a functional structure of the UE-R 15 according to the present embodiment. In the UE-R 15, a first interface 1510, a second interface 1520, and a storage unit 1540 are connected to a control unit 1500 through a bus.

The control unit 1500 is a functional unit for controlling the UE-R 15. The control unit 1500 realizes various processes by reading various programs stored in the storage unit 1540 and executing the read programs.

The first interface 1510 is a functional unit that performs the transmission and reception of data through wireless communication by the LTE access scheme. Here, the first interface 1510 includes an LTE transmission unit, and an LTE reception unit. The LTE transmission unit can transmit data or control information through the LTE base station, and the LTE reception unit can transmit data or control information through the LTE base station. An external antenna 1512 is connected to the first interface 1510. The first interface transmits data or control information through the LTE base station, and can receive the data or control information through the LTE base station. The UE 10 is connected to the mobile communication network (the MME 30, the SGW 40 or the PGW 50) by being connected to the LTE base station through the transmission and reception units, and can perform communication.

Here, the first interface 1510 may separately include a transmission unit that transmit user data and control information which are application communication data, and a reception unit that receives user data and control information which are application communication data.

The second interface 1520 is a functional unit capable of performing direct communication with another UE by using data or control information without using the LTE base station. The second interface 1520 may be a functional unit that performs direct communication using the LTE access technology, or may be a functional unit that performs direct communication using the WLAN access technology. Here, the second interface 1520 includes a direct transmission unit, and a direct reception unit. The direct transmission unit can transmit data or control information without using the LTE base station, and the direct reception unit can transmit data or control information without using the LTE base station. An external antenna 1522 is connected to the second interface 1520. The direct transmission unit can transmit data or control information without using the LTE base station, and the direct reception unit can receive data or control information without using the LTE base station. The external antenna 1512 connected to the first interface 1510 and the external antenna 1522 connected to the second interface 1520 may be used in common.

Here, the second interface 1520 may separately include a transmission unit that transmits user data and control information which are application (APP) communication data, and a reception unit that receives user data and control information which are application (APP) communication data.

The first interface 1510 and the second interface 1520 may be realized as one transmission and reception unit, the transmission unit of the first interface 1510 and the transmission unit of the second interface 1520 may be realized as one transmission unit, and the reception unit of the first interface 1510 and the reception unit of the second interface 1520 may be realized as one reception unit.

The storage unit 1540 is a functional unit that stores programs or data required in various operations of the UE-R 15. For example, the storage unit 1540 is realized using a semiconductor memory, or a hard disk drive (HDD). An EPS bearer context 1542, a UE-to-network relay flag 1548, and a D2D RB ID and EPS RB ID mapping table 1549 are stored in the storage unit 1540.

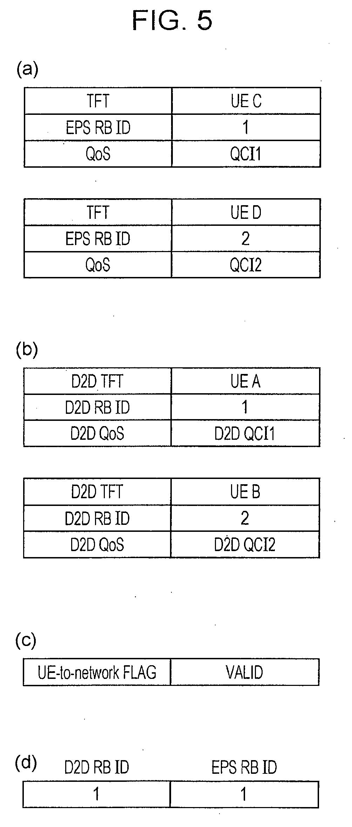

Fig. 5(a) is a diagram showing an example of the EPS bearer context 142. In Fig. 5, an EPS RB ID, a TFT, and QoS are included in the EPS bearer context 1542.

The EPS RB ID is an identifier for identifying connection in a radio communication path with the eNB 20. Here, the connection in the radio communication. path refers to an EPS radio bearer, and the EPS RB ID stores an identifier of the EPS radio bearer. In a case where data is transmitted and received to and from the eNB 20, the UE-R 15 selects the identifier of the EPS radio bearer.

In a case where data is transmitted and received to and from the eNB 20, the UE-R 15 selects the EPS RB ID. In a case where communication with the eNB 20 is performed, the UE-R 15 uses the TFT, selects the EPS RB ID and performs the transmission and reception of data to and from the eNB 20.

The TFT is associated with information regarding an application, a transmission source UE, a transmission destination UE or the PGW 50, and manages information for selecting connection in a communication path, which indicates a bearer (EPS RB ID) in which the transmission and reception of data to and from the eNB are performed depending on the information regarding the application, the transmission source UE, the transmission destination UE, or the PGW 50.

The QoS indicates QoS for each EPS RB ID. The UE-R 15 selects the EPS RB ID by using the TFT, and performs the transmission and reception of data to and from the eNB 20 by using the QoS corresponding to the selected EPS RB ID.

In Fig. 5(a), the TFT is a UE C, the EPS RB ID is 1, and the QoS is QCI1. In a case where communication with the UE C is performed, 1 is selected for the EPS RB ID, and the transmission and reception of data to and from the eNB 20 are performed in the QCI1. Here, Quality Class Indicator (QCI) is information indicating QoS, and represents, for example, the maximum bit rate or the minimum bit rate.

Meanwhile, the TFT is a UE D, the EPS RB ID is 2, and the QoS is QCI2, and in a case where communication with the UE D is performed, 2 is selected for the EPS RB ID, and the transmission and reception of data with the eNB 20 are performed in the QCI2. Here, the TFT includes a UE identifier, but may include information regarding the UE. Not the information regarding the UE but information regarding the application may be included, and the TFT may be selected depending on the application. The information regarding the UE and the information regarding the application may be included, and the TFT may be complexly selected.

Fig. 5(b) is a diagram showing an example of the EPS bearer context 142. In Fig. 5, the EPS bearer context includes a D2D TFT, a D2D RB ID, and D2D QoS.

The D2D traffic flow template (TFT) is associated with the application of the UE-R 15, and manages information for selecting connection in a communication path, which indicates a bearer (D2D RB ID) in which direct communication is performed depending on the application. The D2D TFT may be managed by the TFT.

The D2D RB ID is an identifier for identifying connection in a direct communication path between the UE-R 15 and the UE 10. Here, the D2D radio bearer ID stores an identifier of the D2D radio bearer. In a case where direct communication is performed, the UE-R 15 uses the D2D TFT, selects the D2D RB ID, and performs direct communication in the ProSe. The D2D RB ID is not necessarily the D2D RB ID, and may be a relay RB ID. The D2D RB ID may be managed by the EPS RB ID.

The D2D QoS indicates QoS for each D2D RB ID. The UE-R 15 selects the D2D RB ID by the D2D TFT, and performs direct communication in the ProSe by using the D2D QoS corresponding to the selected D2D RB ID. The D2D QoS may be managed by the QoS. The UE-R 15 can receive data transmitted from the UE 10, and can transmit the data to the eNB 20.

In Fig. 5(b), the D2D TFT is a UE A, the D2D RB ID is 1, and the D2D QoS is D2D QCI1. In a case where communication with the UE A is performed, 1 is selected for the D2D RB ID, and direct communication is performed in the D2D QCI1. Meanwhile, the D2D TFT is a UE B, the D2D RB ID is 2, and the D2D QoS is D2D QCI2. In a case where communication with the UE B is performed, 2 is selected for the D2D RB ID, and direct communication is performed in the D2D QCI2. Here, the D2D TFT includes a UE identifier, but may include information regarding the UE. Not the information regarding the UE but information regarding the application may be included, and the D2D TFT may be selected depending on the application. The information regarding the UE and the information regarding the application may be included, and the D2D TFT may be complexly selected.

The UE-to-network relay flag 1548 is information indicating whether or not the UE-R 15 is permitted to transmit data transmitted from the UE 10 to the mobile communication network including the eNB 20. The UE-to-network relay flag 1548 is information indicating whether or not the UE-R 15 is permitted to transmit data received from the mobile communication network including the eNB 20 to the UE 10. The D2D RB ID and EPS RB ID mapping table 1549 indicates a transmission destination of the received data.

Fig. 5(c) is a diagram showing an example of the UE-to-network flag. In Fig. 5(c), since the UE-to-network flag is managed to be valid, the UE-R 15 is permitted to transmit data transmitted from the UE 10 to the mobile communication network including the eNB 20. The UE-R 15 is permitted to transmit data received from the mobile communication network including the eNB 20 to the UE 10.

Fig. 5(d) shows an example of the D2D RB ID and EPS RB ID mapping table 1549. The D2D RB ID 1545 ("1") and the EPS RB ID 1542 ("1") are managed so as to map to each other. If direct communication data of which the D2D RB ID is 1 is received, the UE-R 15 transmits the data to the mobile communication network including the eNB 20 of which the EPS RB ID is 1. If data is received from the mobile communication network including the eNB 20 of which the EPS RB ID is 1, the UE-R 15 transmits data to direct communication of which the D2D RB ID is 1. A D2D RB ID 1545 and an EPS RB ID 1542 which are not described in the D2D RB ID and EPS RB ID mapping table 1549 are not necessary to transmit data.

### [1.2.3 Structure of eNB]

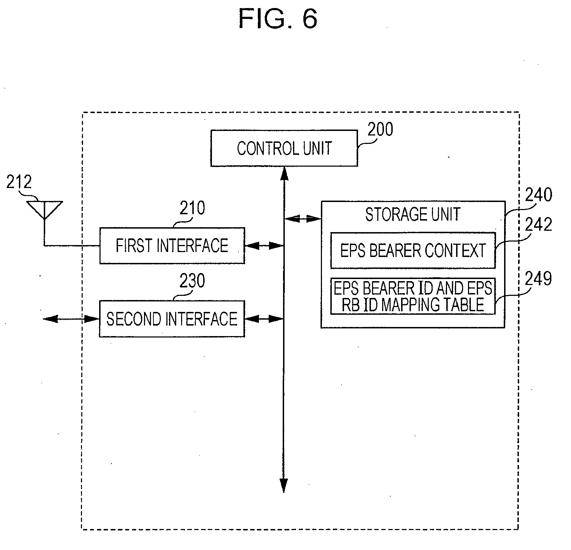

Fig. 6 shows a functional structure of the eNB 20 according to the present embodiment. In the eNB 20, a first interface 210, a mobile communication network interface 230, and a storage unit 240 are connected to a control unit 200 through a bus.

The control unit 200 is a functional unit for controlling the eNB 20. The control unit 2100 realizes various processes by reading various programs stored in the storage unit 240 and executing the read programs.

The first interface 210 is a functional unit that performs the transmission and reception of data through wireless communication by the LTE access scheme. Here, the first interface 210 includes an LTE transmission unit, and an LTE reception unit. The LTE transmission unit can transmit data or control information through the LTE base station, and the LTE reception unit can transmit data or control information through the LTE base station. An external antenna 212 is connected to the first interface 210. The first interface transmits data or control information through the LTE base station, and can receive the data or control information through the LTE base station. The eNB 20 is connected to the mobile communication network (the MME 30, the SGW 40 or the PGW 50) by being connected to the UE 10 through the transmission and reception units, and can perform communication.

Here, the first interface 210 may separately include a transmission unit that transmits user data and control information which are application communication data, and a reception unit that receives user data and control information which are application communication data.

The second interface 230 is a functional unit for allowing the eNB 20 to be connected to the core network 7. The storage unit 240 is a functional unit that stores programs or data required in various operations of the eNB 20. For example, the storage unit 240 is realized using a semiconductor memory, or a hard disk drive (HDD). The storage unit 240 stores an EPS bearer context 242, and an EPS RB ID mapping table 249.

Fig. 6 shows an example of the EPS bearer context 242. The EPS bearer context 242 includes an EPS RB ID, a TFT and QoS. The EPS RB ID is an EPS RB ID which is an identifier of an EPS radio bearer used in a case where the transmission and reception of data to and from the UE-R 15 are performed. In a case where communication with the UE-R 15 is performed, the eNB 20 uses the TFT, selects the EPS RB ID, and performs the transmission and reception of data to and from the UE-R 15. The eNB 20 may manage not the EPS RB ID for performing the transmission and reception of data to and from the UE-R 15 but an EPS RB ID for allowing the UE-R 15 to perform direct communication in the ProSe with the UE 10. In order to perform direct communication in the ProSe, the eNB may separately manage not the EPS RB ID but a Direct-to-Direct (D2D) RB ID.

The eNB 20 may manage the D2D RB ID. The D2D RB ID is an identifier for identifying connection in a communication path between the UE 10 and the UE-R 15. Here, the connection in the direct communication path refers to a D2D radio bearer, and the D2D RB ID is an identifier of the D2D radio bearer.

The TFT is associated with information regarding an application, a transmission source UE, a transmission destination UE or the PGW 50, and manages information for selecting connection in a communication path, which indicates a bearer (EPS RB ID) in which the transmission and reception of data to and from the eNB are performed depending on the information regarding the application, the transmission source UE, the transmission destination UE or the PGW 50.

The QoS indicates QoS for each EPS RB ID. The eNB 20 selects the EPS RB ID by the TFT, and performs the transmission and reception of data to and from the UE-R 15 by using the QoS corresponding to the selected EPS RB ID.

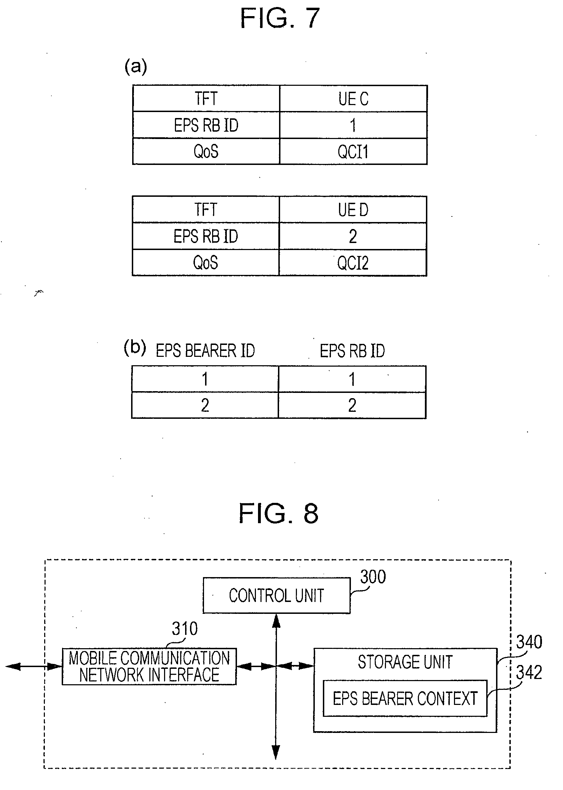

In Fig. 7(a), the TFT is a UE C, the EPS RB ID is 1, and the QoS is QCI1. In a case where the UE 10 or the UE-R 15 communicates with the UE C, 1 is selected for the EPS RB ID, and the transmission and reception of data to and from the UE-R 15 are performed in the QCI1. Although it has been described that the EPS RB ID is selected by the TFT, the EPS RB ID may be determined by the EPS RB ID notified by the UE-R 15.

Meanwhile, the TFT is a UE D, the EPS RB ID is 2, and the QoS is QCI2. In a case where the transmission and reception of data to and from the UE D are performed, 2 is selected for the EPS RB ID, and the transmission and reception of data to and from the eNB 20 are performed in the QCI2. Here, the TFT includes the UE identifier, but may include the information regarding the UE. Not the information regarding the UE but the information regarding the application may be included, and the TFT may be selected depending on the application. The information regarding the UE and the information regarding the application may be included, and the TFT may be complexly selected.

Fig. 7(b) shows an example of the EPS bearer ID and EPS RB ID mapping table 249. An EPS bearer ID ("1") and an EPS RB ID ("1") are managed so as to map to each other. If data is received from the SGW 40 in a case where the EPS bearer ID is 1, the eNB 20 transmits data to the UE-R 15 of which the EPS RB ID is 1. If data is received from the UE-R 15 of which the EPS RB ID is 1, the eNB 20 transmits data to the SGW 40 of which the EPS bearer ID is 1.

An EPS bearer ID ("2") and an EPS RB ID ("2") are managed so as to map to each other. If data of which the EPS bearer ID is 2 is received from the SGW 40, the eNB 20 transmits data to the UE-R 15 of which the EPS RB ID is 2. If data of which the EPS RB ID is 2 is received from the UE-R 15, the eNB 20 transmits data to the SGW 40 of which the EPS bearer ID is 2.

### [1.2.4 Structure of MME]

Fig. 8 shows a functional structure of the MME 30. In the MME 30, a mobile communication network interface 310, and a storage unit 340 are connected to a control unit 300 through a bus.

The control unit 300 is a functional unit for controlling the MME 30. The control unit 300 realizes various processes by reading various programs stored in the storage unit 340 and executing the read programs.

The mobile communication network interface 310 is a functional unit for allowing the MME 30 to be connected to the mobile communication network.

The storage unit 340 is a functional unit that stores programs or data required in various operations of the MME 30. For example, the storage unit 340 is realized using a semiconductor memory, or a hard disk drive (HDD). The storage unit 340 stores an EPS bearer context 342.

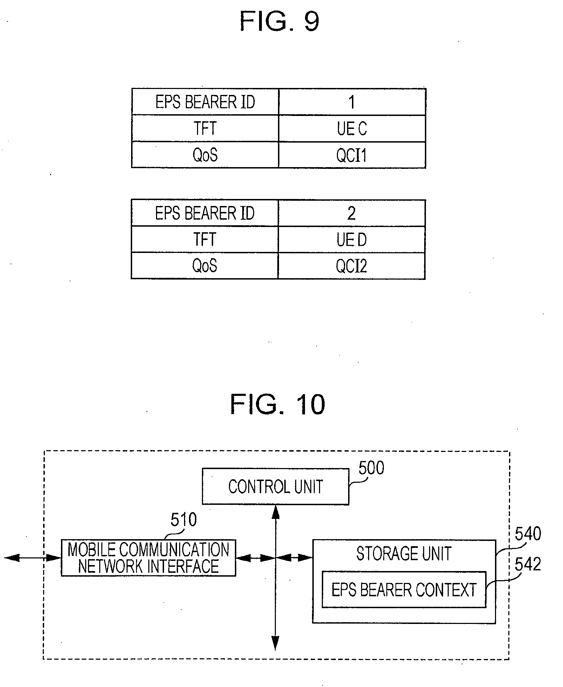

Fig. 9 shows an example of the EPS bearer context 342. In Fig. 9, the EPS bearer context 342 includes an EPS bearer ID, a TFT, and QoS.

The TFT is associated with information regarding an application, a transmission source UE, a transmission destination UE, or the PGW 50, and manages information for selecting connection in a communication path, which indicates a bearer (EPS bearer ID) in which the eNB 20 and the SGW 40 perform the transmission and reception of data depending on the information regarding the application, the transmission source UE, the transmission destination UE or the PGW 50.

The EPS bearer ID is an identifier for identifying connection in a communication path between the eNB 20 and the SGW 40. Here, the connection in the communication path refers to an EPS bearer, and the EPS bearer ID is an identifier of the EPS bearer. In a case where the transmission and reception of data to and from the SGW 40 are performed, the eNB 20 selects an identifier of the EPS bearer. In a case where the transmission and reception of data to and from the eNB 20 are performed, the SGW 40 selects the EPS bearer identifier.

The MME 30 may manage the D2D RB ID. The D2D RB ID is an identifier for identifying connection in a communication path between the UE 10 and the UE-R 15. Here, the connection in the direct communication path refers to a D2D radio bearer, and the D2D RB ID is an identifier of the D2D radio bearer.

The QoS indicates QoS for each EPS bearer ID. The MME 30 manages QoS corresponding to each EPS RB ID between the eNB 20 and the SGW 40.

In Fig. 9, the TFT is a UE C, the EPS bearer ID is 1, and the QoS is QCI1, and these items are managed such that in a case where the UE 10 or the UE-R 15 communicates with the UE C, 1 is selected for the EPS bearer ID, and the transmission and reception of data between the eNB 20 and the SGW 40 are performed in the QCI1.

Meanwhile, the TFT is a UE D, the EPS bearer ID is 2, and the QoS is QCI2, and these items are managed such that in a case where the UE 10 or the UE-R 15 performs the transmission and reception of data with the UE D, 2 is selected for the EPS bearer ID, and the transmission and reception of data between the eNB 20 and the SGW 40 are performed in the QCI2. Here, the TFT includes the UE identifier, but may include the information regarding the UE. Not the information regarding the UE but the information regarding the application may be included, and the TFT may be selected depending on the application. The information regarding the UE and the information regarding the application may be included, and the TFT may be complexly selected.

### [1.2.5 Structure of PGW]

Fig. 10 shows a functional structure of the PGW 50. In the PGW 50, a mobile communication network interface 510, and a storage unit 540 are connected to a control unit 500 through a bus.

The control unit 500 is a functional unit for controlling the PGW 50. The control unit 500 realizes various processes by reading various programs stored in the storage unit 540 and executing the read programs.

The mobile communication network interface 510 is a functional unit for allowing the PGW 50 to be connected to the mobile communication network.

The storage unit 540 is a functional unit that stores programs or data required in various operation of the PGW 50. For example, the storage unit 540 includes a semiconductor memory, or a hard disk drive (HDD). The storage unit 540 stores an EPS bearer context 542.

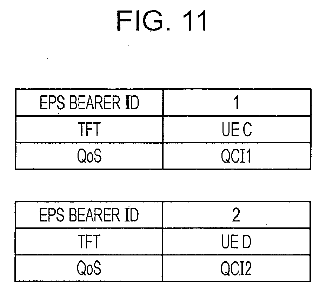

Fig. 11 shows an example of the EPS bearer context 542. The EPS bearer context 542 includes an EPS bearer ID, a TFT, and QoS. The EPS bearer ID is an identifier for identifying connection in a communication path between the PGW 50 and the SGW 40. Here, the connection in the communication path refers to an EPS bearer, and the EPS bearer ID stores an identifier of the EPS bearer. In a case where the transmission and reception of data to and from the SGW 40 are performed, the PGW 50 selects the identifier of the EPS bearer.

The TFT is associated with information regarding an application, a transmission source UE, a transmission destination UE, or the PGW 50, and manages information for selecting connection in a communication path, which indicates a bearer (EPS bearer ID) in which the transmission and reception of data to and from the SGW 40 are performed depending on the information the application, the transmission source UE, the transmission destination UE, or the PGW 50.

The QoS indicates QoS for each EPS bearer ID. The PGW 50 and the SGW 40 manage QoS corresponding to each EPS RB ID.

In Fig. 11, the TFT is a UE C, the EPS bearer ID is 1, and the QoS is QCI1, and these items are managed such that in a case where the UE 10 or the UE-R 15 communicates with the UE C, 1 is selected for the EPS bearer ID, and the transmission and reception of data to and from the SGW 40 are performed in the QCI1.

Meanwhile, the TFT is a UE D, the EPS bearer ID is 2, and the QoS is QCI2, and these items are managed such that in a case where the UE 10 or the UE-R 15 performs the transmission and reception of data to and from the UE D, 2 is selected for the EPS bearer ID, and the transmission and reception of data to and from the SGW 40 in the QCI2 is managed. Here, the TFT includes the UE identifier, but may include the information regarding the UE. Not the information regarding the UE but the information regarding the application may be included, and the TFT may be selected depending on the application. The information regarding the UE and the information regarding the application may be included, and the TFT may be complexly selected.

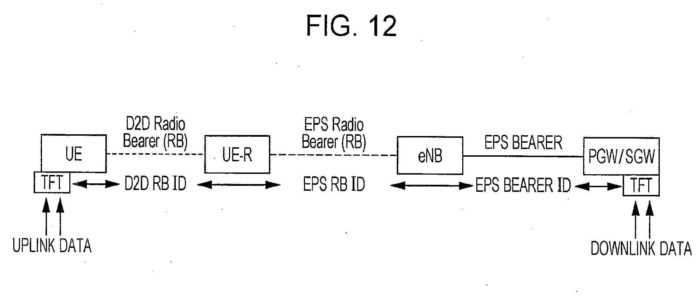

Fig. 12 shows the relationship between the D2D radio bearer, the EPS radio bearer and the EPS bearer in the PGW 50/SGW 40, the eNB 20, the UE-R 15, and the UE 10.

In order to perform the transmission and reception of data, the PGW 50/SGW 40 manages the EPS bearer ID. In order to transmit downlink data, the PGW 50 manages the TFT. The eNB 20 manages the EPS bearer ID and the EPS RB ID such that these IDs are associated with each other. The UE-R 15 manages the EPS RB ID and the D2D RB ID. The UE 10 manages the D2D RB ID. In order to transmit uplink data, the UE 10 manages the D2D TFT (TFT).

A flow in a case where data is transmitted from the PGW 50 to the UE 10 will be described using the relationship of Fig. 12. Initially, the PGW 50 manages the EPS bearer ID and selects the EPS beater ID according to the TFT, and the PGW 50 transmits data to the SGW 40. The SGW 40 transmits data from the PGW 50 to the eNB 20 depending on the EPS beater ID.

Subsequently, the eNB 20 transmits data from the SGW 40 to the UE-R 15 depending on the EPS bearer ID. In this case, the eNB 20 solves the EPS RB ID from the EPS bearer ID and EPS RB ID mapping table 249 by using the EPS bearer ID included in the data from the SGW 40, and transmits the data to the UE-R 15 according to the EPS RB ID.

Subsequently, the UE-R 15 transmits the data from the eNB 20 to the UE 10 through direct communication in the ProSe according to the EPS RB ID. In this case, the UE-R 15 solves the D2D RB ID from the EPS RB ID and D2D RB ID mapping table 1549 by using the EPS RB ID included in the data from the eNB 20, and transmits the data to the UE 10 according to the D2D RB ID.

As stated above, the PGW 50 can transmit data to the UE 10 through the SGW 40, the eNB 20 and the UE-R 15.

A flow in a case where data is transmitted from the UE 10 to the PGW 50 will be described using the relationship of Fig. 12. Initially, the UE 10 selects the D2D RB ID according to the D2D TFT, and the UE 10 transmits the data to the UE-R 15. The UE-R 15 transmits the data from the UE 10 to the eNB 20 according to the D2D RB ID. In this case, the UE-R 15 solves the EPS RB ID from the D2D RB ID and EPS RB ID mapping table by using the D2D RB ID included in the data from the UE 10, and transmits the data to the eNB 20 according to the EPS RB ID.

Subsequently, the eNB 20 transmits the data from the UE-R 15 to the SGW 40 according to the EPS RB ID. In this case, the eNB 20 solves the EPS bearer ID from the EPS bearer ID and EPS RB ID mapping table 249 by using the EPS RB ID included in the data from the UE-R 15, and transmits the data to the SGW 40 according to the EPS bearer ID.

Subsequently, the SGW 40 transmits the data from the eNB 20 to the PGW 50 according to the EPS bearer ID.

As mentioned above, the UE 10 can transmit the data to the PGW 50 through the UE-R 15, the eNB 20 and the SGW 40. The PGW 50 transmits the data of the UE 10 to the PDN 80.

### [1.3 Description of Process]

### [1.3.1 PDN connection establishing procedure in UE-to-Network Relay]

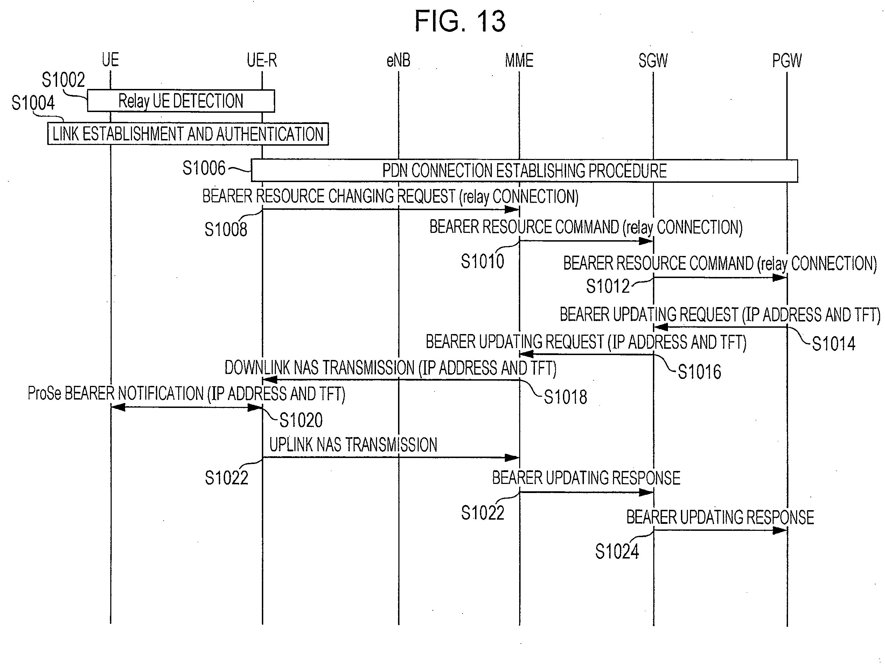

Hereinafter, a specific procedure and process in the above-described mobile communication system will be described. A procedure in which the UE 10 present outside of coverage performs proximity detection on the UE-R 15 present within coverage, as a relay UE, and establishes PDN connection will be described with reference to Fig. 13.

Initially, the UE 10 detects that the UE-R 15 is present in proximity enough to perform direct communication (S1002). Here, as the method in which the UE 10 detects the UE-R 15, various methods are considered. For example, the UE-R 15 transmits a signal in a broadcast manner in order to notify of the presence of the UE-R 15 and the UE 10 receives the signal of the UE-R 15, and thus, the UE can detect the UE-R. The UE-R 15 may notify the UE 10 that the UE-R is able to relay. It is assumed that the UE-R 15 being able to relay is previously permitted by the mobile communication network (UE-to-network relay flag 1548 is valid).

Subsequently, the UE 10 performs link establishment and authentication with the UE-R 15 (S1004). Here, the UE 10 performs the authentication with the UE-R 15 in order to perform the link establishment with the UE-R 15. Here, in order to authenticate the UE 10, the UE-R 15 may perform the authentication by using the fact that these apparatuses belong to the same group. After the UE 10 is authenticated, the UE-R 15 performs the link establishment with the UE 10.

The UE-R 15 that has established the link with the UE 10 performs a PDN connection establishing procedure (S1006). Here, the PDN connection establishment is the same as the procedure of the related art in the mobile communication system, and thus, the description thereof will be omitted. The UE-R 15 can establish the PDN connection through the PDN connection establishing procedure. In a case where the UE-R 15 has already established the PDN connection, the present procedure may not be performed.

Thereafter, the UE-R 15 transmits a bearer resource changing request to the MME 30 (S1008). Here, this request includes information indicating that the UE-R 15 performs relay connection.

Subsequently, the MME 30 transmits a bearer resource command to the SGW 40 (S1010), and the SGW 40 transmits the bearer resource command to the PGW 50 (S1012). In this case, the bearer resource command includes information indicating relay connection. The PGW 50 receives the bearer resource command from the SGW 40, and detects the presence of the UE connected via a relay by using information which indicates relay connection and is included in the bearer resource command. The PGW 50 allocates an IP address to the UE (UE 10) connected via a relay (UE-R 15). The PGW 50 generates a TFT in order to transmit data to the UE 10.

Thereafter, the PGW 50 transmits a bearer updating request to the SGW 40 (S1014), and the SGW 40 transmits the bearer updating request to the MME 30 (S1016). Here, the bearer updating request includes the IP address allocated to the UE 10 by the PGW 50 and the TFT. The PGW 50 may generate the EPS bearer ID, and may include the EPS bearer ID. In a case where the EPS bearer ID is included in the bearer updating request, the SGW 40 may include the EPS bearer ID.

Subsequently, the MME 30 transmits the transmission of a downlink NAS to the UE-R 15 to the UE-R (S1018). The downlink NAS transmission includes the IP address included in the bearer updating request and the TFT. In a case where the EPS bearer ID is included in the bearer updating request, the EPS bearer ID may be included. The UE-R 15 that has received the EPS bearer ID included in the bearer updating request detects that the D2D radio bearer for the relay connection (UE 10) is established, and generates the D2D RB ID. The UE-R 15 manages the D2D RB ID and the EPS bearer ID in the EPS RB ID mapping table 1549. Here, as the EPS bearer ID, the EPS RB ID may be used.

Thereafter, the UE-R 15 transmits a ProSe bearer notification to the UE 10 (S1020). The ProSe bearer notification includes the IP address notified from the MME 30 and the TFT. In a case where the EPS bearer ID is included in the downlink NAS transmission, the EPS bearer ID may be included. The UE 10 manages the IP address and the TFT, and uses to transmit and receive the subsequent data. In a case where the EPS bearer ID is included in the ProSe bearer notification, the UE 10 may manage the EPS bearer ID, and may use to transmit and receive the subsequent data.

The UE-R 15 that has performed the ProSe bearer notification transmits an uplink NAS transmission as a response to the downlink NAS transmission to the MME 30 (S1022).

In response to the downlink NAS transmission, the MME 30 that has received the uplink NAS transmission transmits a bearer updating response to the SGW 40 (S1022), and the SGW 40 transmits a bearer updating response to the PGW 50 (S1024).

Through the above-described procedure, the UE 10 present outside of coverage is connected to the mobile communication network via the UE-R 15 present within coverage, and can perform the transmission and reception of data via the mobile communication network.

### [1.3.2 QoS update procedure]

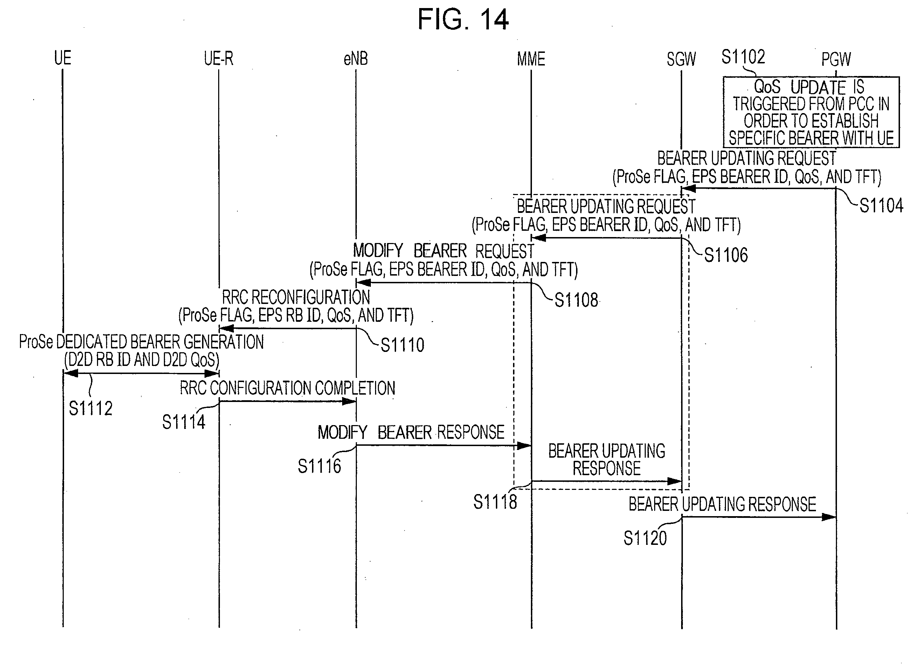

Hereinafter, the QoS update procedure will be illustrated in Fig. 14. Here, a bearer different from the bearer established in the PDN connection establishing procedure in the UE-to-Network relay.

Initially, the PGW 50 triggers QoS update from PCC in order to establish a specific bearer with the UE 10 (S1102). The Policy and Charging Control (PCC) is a mechanism in which the PCRF 70 permits and determines the access control of the user and the policy of the QoS parameter, and performs QoS control corresponding to the access control of the user according to the permitted policy.

The PGW 50 that has triggered the QoS from the PCC transmits a bearer updating request for requesting for communication quality updating to the SGW 40 (S1104), and the SGW 40 transmits a bearer updating request for requesting to update Communication quality to the MME 30 (S1106). Here, the bearer updating request includes a ProSe flag, an EPS bearer ID, QoS, and a TFT. The ProSe flag is information (information indicating direct communication) indicating that a D2D radio bearer for a direct communication path between the UE 10 and the UE-R 15 is generated/updated. The ProSe flag may a ProSe indicator, a Relay indicator, or a ProSe Relay flag as long as information (information indicating direct communication) indicating that the D2D radio bearer for the direct communication path between the UE 10 and the UE-R 15 is generated/updated is used. Here, in a case where the EPS radio bearer for the communication path between the eNB 20 and the UE-R 15 is generated/updated without generating/updating the D2D radio bearer for the direct communication path between the UE 10 and the UE-R 15, the ProSe flag may not be included.

The PGW 50 may transmit the EPS beater updating request to the SGW 40, and the SGW 40 may transmit the bearer updating request to the MME 30. However, the PGW 50 may directly transmit the bearer updating request to the MME 30.

The MME 30 that has received the bearer updating request detects the ProSe flag (information indicating the direct communication), and detects that the D2D radio bearer between the UE 10 and the UE-R 15 is generated/updated. Here, in a case where it is difficult to detect the ProSe flag, the MME 30 detects that the EPS radio bearer between the eNB 20 and the UE-R 15 is generated/updated without generating/updating the D2D radio bearer for the direct communication path between the UE 10 and the UE-R 15.

Thereafter, the MME 30 transmits a Modify bearer request for requesting to update communication quality to the eNB 20 (S1108). Here, the Modify bearer request includes a ProSe flag, an EPS bearer ID, QoS, and a TFT. The ProSe flag is information (information indicating direct communication) for generating/updating not the EPS radio bearer between the eNB 20 and the UE 10 but the D2D radio bearer between the UE 10 and the UE-R 15 in the eNB 20. The ProSe flag may be a ProSe indicator, a Relay indicator, or a ProSe Relay flag as long as information indicating that the D2D radio bearer for the direct communication bearer between the UE 10 and the UE-R 15 is generated/updated is used. Here, in a case where the EPS radio bearer for the communication path between the eNB 20 and the UE-R 15 is generated/updated without generating/updating the D2D radio bearer for the direct communication path between the UE 10 and the UE-R 15, the ProSe flag may not be included.

The eNB 20 that has received the Modify bearer request from the MME 30 detects the ProSe flag included in the Modify bearer request, and detects that the D2D radio bearer for the direct communication path between the UE-R 15 and the UE 10 is updated without changing the EPS radio bearer between the eNB 20 and the UE-R 15. Meanwhile, in a case where it is difficult to detect the ProSe, the eNB 20 detects the EPS radio bearer between the eNB 20 and the UE-R 15 is generated/updated without generating/updating the D2D radio bearer for the direct communication path between the UE 10 and the UE-R 15.

The eNB 20 detects the TFT and QoS corresponding to the EPS RB ID. Here, the eNB 20 generates the EPS RB ID from the EPS bearer ID. The eNB 20 adds the EPS bearer ID and the EPS RB ID to the EPS bearer ID and EPS RB ID mapping table 249.

Subsequently, the eNB 20 transmits an RRC reconfiguration notification for requesting to update communication quality in order to update the D2D radio bearer for the direct communication bearer between the UE-R 15 and the UE 10 (S1110). Here, the RRC reconfiguration includes an RB ID, and QoS. The ProSe flag is included in the Modify bearer request from the MME 30, and in a case where the D2D radio bearer for the direct communication path between the UE-R 15 and the UE 10 is updated, the Prose flag and the TFT are included. The ProSe flag may be a ProSe indicator, a Relay indicator, or a ProSe Relay flag as long as information (information indicating direct communication) indicating that the D2D radio bearer for the direct communication path between the UE 10 and the UE-R 15 is generated/updated is used. Here, in a case where the EPS radio bearer for the communication path between the eNB 20 and the UE-R 15 is generated/updated without generating/updating the D2D radio bearer for the direct communication path between the UE 10 and the UE-R 15, the ProSe flag and the TFT may not be included.

The UE-R 15 that has received the RRC reconfiguration from the eNB 20 and has detected the ProSe flag detects that the D2D radio bearer for the direct communication path between the UE-R 15 and the UE 10 is updated without updating the EPS radio bearer with the eNB 20. The UE-R 15 generates the D2D RB ID, and detects the TFT (D2D TFT) and the QoS (D2D QoS) corresponding to the D2D RB ID. Meanwhile, in a case where the UE-R 15 receives the RRC reconfiguration from the eNB 20 and detects that the EPS radio bearer for the communication bearer between the eNB 20 and the UE-R 15 is updated without detecting the ProSe flag, the UE-R 15 detects that the EPS radio bearer for the communication path with the eNB 20 is updated, and the UE-R 15 performs the procedure of the related art of updating the EPS radio bearer with the eNB 20.

Thereafter, the UE-R 15 and the UE 10 generate a ProSe dedicated bearer for requesting to update communication quality (S1112). Here, the UE-R 15 notifies the UE 10 of the D2D RB ID and the D2D QoS, and the UE 10 manages the D2D RB ID and the D2D QoS. Here, the UE 10 may generate the D2D TFT, and may associate the generated D2D TFT with the D2D RB ID. The generated D2D TFT may be associated with the application. In a case where the UE-R 15 receives the RRC reconfiguration from the eNB 20 and does not detect that the D2D radio bearer for the direct communication path between the UE-R 15 and the UE 10 is updated without detecting the ProSe flag, the present process is not performed.

The UE-R 15 that has generated the ProSe dedicated bearer in cooperation with the UE 10 transmits the RRC reconfiguration notification (S1114). The eNB 20 transmits the Modify bearer response to the MME 30 (S1116). The MME 30 transmits the bearer updating response to the SGW 40 (S1118), and the SGW 40 transmits the Modify bearer response to the PGW 50 (S1120). The MME 30 may directly transmit the Modify bearer response to the PGW 50 without transmitting the Modify bearer response to the SGW 40.

Through the above-described procedure, the UE-R 15 and the UE 10 can generate the ProSe dedicated bearer. The dedicated bearer is used in association with a specific application requiring QoS, and it is possible to improve performance of the application. The UE-R 15 transmits the data from the UE 10 to the mobile communication network (UE-to-network relay), and thus, the UE 10 can be connected to the mobile communication network via the UE-R 15.

As described above, the mobile communication provider can provide the transmission and reception of data in which a communication source UE and a communication destination UE secure QoS for direct communication in the ProSe. The PGW/SGW can manage the (radio) bearer in the direct communication between the UEs. The eNB can manage the radio bearer in the direct communication between the UEs. The communication source UE and the communication destination can manage the radio bearer in the direct communication between the UEs. The relay UE can manage the radio bearer with the UE present outside of coverage in the UE-to-Network relay.

Each of the PGW/SGW, the MME, the eNB, the communication source UE, the communication destination UE and the relay UE which are described above manages the (radio) bearer in the direct communication, and can perform the procedure of securing the QoS for the bearer of the direct communication.

The mobile communication network can perform the procedure of securing the QoS for the direct communication in the ProSe with as small a change as possible while providing the transmission and reception of data of the related art.

### [1.3.3 Modification Example 1]

Although it has been described above that the UE 10 is a terminal apparatus present outside of coverage and the UE-R 15 is a terminal apparatus present within coverage, the UE 10 may be a terminal apparatus present within coverage and the UE-R 15 may be a terminal apparatus present outside of coverage.

In a case where the UE 10 is present within coverage and the UE-R 15 is present outside of coverage, the eNB 20 may transmit a RRC reconfiguration notification including the ProSe flag, the EPS RB ID, the QoS, and the TFT to the UE 10 (S1110). Meanwhile, the UE 10 receives the RRC reconfiguration notification from the eNB 20, and the UE 10 that has detected the ProSe flag detects that the D2D radio bearer for the direct communication path between the UE-R 15 and the UE 10 is updated. The UE 10 that has detected that the D2D radio bearer for the direct communication path between the UE-R 15 and the UE 10 generates a ProSe dedicated bearer with the UE-R 15 (S1112). The UE 10 notifies the UE-R 15 of the D2D RB ID and the D2D QoS.

Here, in a case where the UE 10 receives the RRC reconfiguration from the eNB 20 and detects that the EPS radio bearer for the communication path between the eNB 20 and the UE 10 is updated without detecting the ProSe flag, the UE 10 detects the EPS radio bearer for the communication path with the eNB 20 is updated, and performs the procedure of the related art of updating the EPS radio bearer with the eNB 20.

In a case where the UE 10 updates the D2D radio bearer between the UE 10 and the UE-R 15 or updates the EPS radio bearer for the communication path between the eNB 20 and the UE 10, the UE 10 notifies the eNB 20 of RRC configuration completion (S1114). Other procedures are the same as those in the method described in the first embodiment.

### [1.3.4 Modification Example 2]

Although it has been described above that the eNB 20 transmits the RRC reconfiguration notification to any one of the UE-R 15 and the UE 10 present within coverage, the eNB 20 may transmit the RRC reconfiguration notification including the ProSe flag, the EPS RB ID, the QoS and the TFT to the UE 10, and may transmit the RRC reconfiguration notification including the ProSe flag, the EPS RB ID, the QoS and the TFT to the UE-R 15 (S1110). The UE 10 receives the RRC reconfiguration notification from the eNB 20, and the UE 10 that has detected the ProSe flag detects that the D2D radio bearer for the direct communication path between the UE-R 15 and the UE 10 is updated. The UE-R 15 receives the RRC reconfiguration notification from the eNB 20, and the UE-R 15 that has detected the ProSe flag detects that the D2D radio bearer for the direct communication path between the UE-R 15 and the UE 10.

The UE 10 and the UE-R 15 that has detected that the D2D radio bearer for the direct communication path between the UE-R 15 and the UE 10 is updated generate a ProSe dedicated bearer (S1112). The UE 10 and the UE-R 15 may notify each other of the D2D RB ID and the D2D QoS.

Here, in a case where the UE 10 receives the RRC reconfiguration from the eNB 20 and the UE 10 detects that the EPS radio bearer for the communication path between the eNB 20 and the UE 10 is updated without detecting the ProSe flag, the UE 10 performs the procedure of the related art of updating the EPS radio bearer with the eNB 20. In a case where the UE-R 15 receives the RRC reconfiguration from the eNB 20 and the UE-R 15 detects that the EPS radio bearer for the communication path between the eNB 20 and the UE-R 15 without detecting the ProSe flag, the UE-R 15 performs the procedure of the related art of updating the EPS radio bearer with the eNB 20.

In a case where the UE 10 updates the D2D radio bearer between the UE 10 and the UE-R 15 or updates the EPS radio bearer for the communication path between the eNB 20 and the UE 10, the UE 10 notifies the eNB 20 of RRC configuration completion (S1114). Meanwhile, in a case where the UE-R 15 updates the D2D radio bearer between the UE 10 and the UE-R 15 or updates the EPS radio bearer for the communication path between the eNB 20 and the UE-R 15, the UE-R 15 notifies the eNB 20 of RRC configuration completion (S1114). The RRC configuration completion is received from the UE 10 and the UE-R 15, and thus, the eNB 20 detects that the ProSe dedicated bearer is generated between the UE 10 and the UE-R 15 or RRC reconfiguration between the eNB 20 and the UE-R 15 and between the eNB 20 and the UE 10 is completed. Other procedures are the same as those in the method described in the first embodiment.

### [2. Second Embodiment]

### [2.1 Outline of Mobile Communication System]

Hereinafter, a second embodiment will be described. In the second embodiment, the QoS update procedure is different. The eNB 20 is involved with the QoS update procedure in the first embodiment, but the eNB 20 is not involved with the QoS update procedure in the present embodiment.

Since the structure of the mobile communication system of Fig. 1 can be used, the detailed description thereof will be omitted. The structure of the UE, the structure of the UE-R, the structure of the eNB, the structure of the MME, the structure of the SGW 40 and the structure of the PGW 50 in the mobile communication system are the same as those in the first embodiment, and thus, the detailed description thereof will be omitted. The PDN connection establishing procedure in the UE-to-Network Relay is the same as that in the first embodiment, and thus, the detailed description thereof will be omitted.

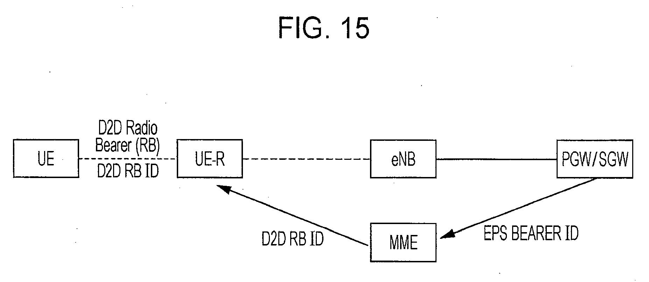

Fig. 15 shows the relationship between the D2D radio bearer, the EPS radio bearer and the EPS bearer in the PGW 50/SGW 40, the eNB 20, the UE-R 15 and the UE 10 according to the present embodiment.

The PGW 50/SGW 40 manages the EPS bearer ID in order to transmit and receive data. The PGW 50 manages the TFT in order to transmit downlink data. The MME 30 manages the EPS bearer ID and the D2D RB ID such that these IDs are associated with each other. The UE-R 15 manages the D2D RB ID. The UE 10 manages the D2D RB ID. The UE 10 manages the D2D TFT (TFT) in order to transmit uplink data.

A flow in a case where data is transmitted from the PGW 50 to the UE 10 will be described using the relationship of Fig. 15. Initially, the PGW 50 manages the EPS bearer ID and selects the EPS bearer ID according to the TFT, and the PGW 50 transmits the data to the SGW 40. The SGW 40 transmits the data from the PGW 50 to the eNB 20 according to the EPS bearer ID.

Subsequently, the eNB 20 transmits the data from the SGW 40 to the UE-R 15 according to the EPS bearer ID. In this case, the eNB 20 solves the EPS RB ID from the EPS bearer ID and EPS RB ID mapping table 249 by using the EPS bearer ID included in the data from the SGW 40, and transmits the data to the UE-R 15 according to the EPS RB ID.

Meanwhile, the UE-R 15 transmits the data from the eNB 20 to the UE 10 through the direct communication in the ProSe according the D2D RB ID from the MME 30. In this case, the UE-R 15 transmits the data to the UE 10 according to the D2D RB ID from the MME 30.

As stated above, the PGW 50 can transmit the data to the UE 10 via the SGW 40, the eNB 20 and the UE-R 15. The UE-R 15 autonomously manages the UE 10, and transmits the data from the eNB 20 to the UE 10 if necessary. As the method in which the UE-R 15 manages the UE 10, various methods are considered. For example, in a case where information indicating the UE 10 is included in the application, the data may be transmitted to the UE 10. In a case where information (for example, group ID) indicating that the UE 10 belongs to the same group as the UE-R 15 is included in the application, the UE-R 15 may transmit the data to the UE 10.

A flow in a case where data is transmitted to the PGW 50 from the UE 10 will be described using the relationship of Fig. 15. Initially, the UE 10 selects the D2D RB ID according to the D2D TFT, and the UE 10 transmits the data to the UE-R 15. The UE-R 15 detects that the data from the UE 10 is not addressed to the UE-R 15, and transmits the data from the UE 10 to the eNB 20 according to the D2D RB ID. In this case, the UE-R 15 solves the EPS RB ID from the D2D RB ID and EPS RB ID mapping table by using the D2D RB ID included in the data from the UE 10, and transmits the data to the eNB 20 according to the EPS RB ID.

Subsequently, the eNB 20 transmits the data from the UE-R 15 to the SGW 40 according to the EPS RB ID. In this case, the eNB 20 solves the EPS bearer ID from the EPS bearer ID and EPS RB ID mapping table 249 by using the EPS RB ID included in the data from the UE-R 15, and transmits the data to the SGW 40 according to the EPS bearer ID.

Thereafter, the SGW 40 transmits the data from the eNB 20 to the PGW 50 according to the EPS bearer ID.

As mentioned above, the UE 10 can transmit the data to the PGW 50 via the UE-R 15, the eNB 20 and the SGW 40. The PGW 50 transmits the data of the UE 10 to the PDN 80.

### [2.2 Description of Process]

### [2.2.1 QoS update Procedure]

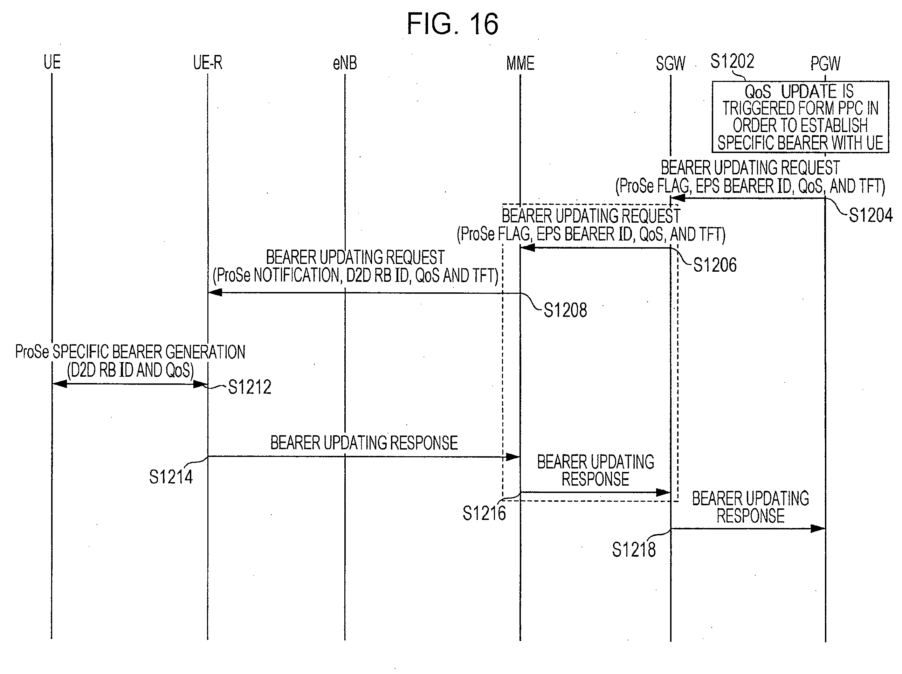

The QoS update procedure according to the present embodiment will be described with reference to Fig. 16. Initially, the PGW 50 triggers QoS update from PCC in order to establish a specific bearer with the UE 10 (S1202).

The PGW 50 that has triggered the QoS from the PCC transmits the bearer updating request for requesting to update communication quality to the SGW 40 (S1204), and the SGW 40 transmits the bearer updating request for requesting the communication quality updating to the MME 30 (S1206). Here, the bearer updating request includes a ProSe flag, an EPS bearer ID, QoS, and a TFT. The ProSe flag is information for generating/updating the D2D radio bearer for the direct communication path between the UE 10 and the UE-R 15. The ProSe flag may be a ProSe indicator, a Relay indicator, or a ProSe Relay flag as long as information indicating that the D2D radio bearer for the direct communication path between the UE 10 and the UE-R 15 is generated/updated is used. Here, in a case where the EPS radio bearer for the communication path between the eNB 20 and the UE-R 15 is generated/updated without generating/updating the D2D radio bearer for the direct communication path between the UE 10 and the UE-R 15, the ProSe flag may not be included. The PGW 50 transmits the EPS bearer updating request to the SGW 40, and the SGW 40 transmits the bearer updating request to the MME 30. However, the PGW 50 may directly transmit the bearer updating request the MME 30.

The MME 30 that received the bearer updating request detects the ProSe flag, and detects that the D2D radio bearer between the UE 10 and the UE-R 15 is generated/updated. Here, in a case where it is difficult to detect the ProSe flag, the MME 30 detects that the EPS radio bearer between the eNB 20 and the UE-R 15 is generated/updated without generating/updating the D2D radio bearer for the direct communication path between the UE 10 and the UE-R 15.

Subsequently, the MME 30 transmits the bearer updating request for requesting the communication quality updating to the UE-R 15 (S1208). Here, the Modify bearer request includes a ProSe flag, a D2D RB ID, QoS, and a TFT. The ProSe flag is information for generating/updating the D2D radio bearer for the direct communication path between the UE 10 and the UE-R 15. The ProSe flag may be a ProSe indicator, a Relay indicator, or a ProSe Relay flag as long as information indicating that the D2D radio bearer for the direct communication path between the UE 10 and the UE-R 15 is generated/updated is used. Here, in a case where the EPS radio bearer for the communication path between the eNB 20 and the UE-R 15 is generated/updated without generating/updating the D2D radio bearer for the direct communication path between the UE 10 and the UE-R 15, the ProSe flag may not be included.

The MME 30 may manage the D2D RB ID in the EPS bearer context 342, may notify the UE-R 15 of the D2D RB ID, and may use the EPS bearer ID as the D2D RB ID between the UE-R 15 and the UE 10. The QoS may manage the D2D QoS as information regarding bearer dedicated communication quality in the EPS bearer context 342, may notify the UE-R 15 of the QoS, and may use the QoS as the D2D QoS. The TFT may manage the D2D TFT as information regarding bearer dedicated communication quality in the EPS bearer context 342, may notify the UE-R 15 of the TFT, and may use the TFT as the D2D TFT.

The UE-R 15 that has received the bearer updating request from the MME 30 and has detected the ProSe flag detects that the D2D radio bearer for the direct communication path between the UE-R 15 and the UE 10 is updated. Meanwhile, in a case where the UE-R 15 that has received the bearer updating request from the MME 30 and has not detect the ProSe flag, the UE-R 15 detects that the EPS radio bearer for the communication path with the eNB 20 is updated without updating the D2D radio bearer for the direct communication path between the UE-R 15 and the UE 10, and performs the procedure of the related art of updating the EPS radio bearer with the eNB 20.

The UE-R 15 detects the TFT and the QoS corresponding to the EPS RB ID. Here, the UE-R 15 generates the EPS RB ID from the EPS bearer ID. The UE-R 15 adds the D2D RB ID and the EPS RB ID to the D2D RB ID and EPS RB ID mapping table 1549.

Thereafter, the UE-R 15 generates the Pro-Se dedicated bearer with the UE 10 for requesting the communication quality updating (S1212). The UE-R 15 detects the D2D RB ID included in the RRC reconfiguration notification. Here, the UE-R 15 notifies the UE 10 of the D2D RB ID and the QoS, and the UE 10 manages the D2D RB ID and the QoS (D2D QoS). The UE-R 15 may add the D2D RB ID and the QoS to the EPS RB ID and EPS RB ID mapping table 1549 in the EPS radio bearer that has been already established with the eNB 20. The UE 10 may generate the D2D TFT, and may associate the generated D2D TFT with the D2D RB ID. The generated D2D TFT may be associated with the application. In a case where the UE-R 15 receives the RRC reconfiguration from the eNB 20 and does not detect that the D2D radio bearer for the direct communication path between the UE-R 15 and the UE 10 is updated, the present process is not performed.

The UE-R 15 that has generated the ProSe dedicated bearer with the UE 10 transmits a bearer updating response to the MME 30 (S1214). The MME 30 transmits the bearer updating response to the SGW 40 (S1216), and the SGW 40 transmits the bearer updating response to the PGW 50 (S1218). The MME 30 may direct transmit the bearer updating response to the PGW 50 without transmitting the bearer updating response to the SGW 40.

Through the above-described procedure, the UE-R 15 and the UE 10 can generate the ProSe dedicated bearer. The dedicated bearer is used in association with a specific application necessary to secure QoS, and thus, it is possible to improve the performance of the application. The UE-R 15 transmits the data from the UE 10 to the mobile communication network (UE-to-network relay), and thus, the UE 10 can be connected to the mobile communication network via the UE-R 15.

As stated above, the mobile communication provider can provide the transmission and reception of data in which the communication source UE and the communication destination UE have secured QoS for the direct communication in the ProSe. The PGW/SGW can manage the (radio) bearer in the direct communication between the UEs. The eNB can manage the radio bearer in the direct communication between the UEs. The communication source UE and the communication destination can manage the radio bearer in the direct communication between the UEs. The relay UE can manage the radio bearer with the UE present outside of coverage in the UE-to-Network relay.

Each of the PGW/SGW, the MME, the eNB, the communication source UE, the communication destination UE and the relay UE which are described above manages the (radio) bearer in the direct communication, and can perform a procedure of securing QoS for the bearer of the direct communication.

The mobile communication network can perform the procedure of securing the QoS for the direct communication in the ProSe with as small a change as possible while providing the transmission and reception of data of the related art.

### [2.2.2 Modification Example 3]

Although it has been described above that the UE 10 is a terminal apparatus present outside of coverage and the UE-R 15 is a terminal apparatus within coverage, the UE 10 may be a terminal apparatus present within coverage and the UE-R 15 may be a terminal apparatus within coverage.

In a case where the UE 10 is present within coverage and the UE-R 15 is present within coverage, the MME 30 may transmit the bearer updating request including the ProSe flag, the D2D RB ID, the QoS and the TFT to the UE 10 (S1208). Meanwhile, the UE 10 receives the bearer updating request from the MME 30, and the UE 10 that has detected the ProSe flag detects that the D2D radio bearer for the direct communication path between the UE-R 15 and the UE 10 is updated. The UE 10 that has detected that the D2D radio bearer for the direct communication path between the UE-R 15 and the UE 10 is updated generates the ProSe dedicated bearer with the UE-R 15 (S1212). The UE 10 notifies the UE-R 15 of the D2D RB ID and the D2D QoS.

Here, in a case where the UE 10 that has received the RRC reconfiguration from the MME 30 and detects that the EPS radio bearer for the communication path between the eNB 20 and the UE 10 is updated without detecting the ProSe flag, the UE 10 detects that the EPS radio bearer flag for the communication path with the eNB 20 is updated, and performs the procedure of the related art of updating the EPS radio bearer with the eNB 20.

In a case where the UE 10 updates the D2D radio bearer between the UE 10 and the UE-R 15 or updates the EPS radio bearer for the communication path between the eNB 20 and the UE 10, the UE 10 notifies the MME 30 of the bearer updating response (S1214). Other procedures are the same as those in the method described in the second embodiment.

### [2.2.3 Modification Example 4]

Although it has been described above that the MME 30 transmits the bearer updating request to any one of the UE-R 15 and the UE 10 present within coverage, the MME may transmit the bearer updating request including the ProSe flag, the EPS RB ID, the QoS and the TFT to the UE 10, and may transmit the bearer updating request including the ProSe flag, the EPS RB ID, the QoS and the TFT to the UE-R 15 (S1208). The UE 10 receives the bearer updating request from the MME 30, and the UE 10 that has detected the ProSe flag detects that the D2D radio bearer for the direct communication path between the UE-R 15 and the UE 10 is updated. The UE-R 15 receives the bearer updating request from the MME 30, and the UE-R 15 that has detected the ProSe flag detects that the D2D radio bearer for the direct communication path between the UE-R 15 and the UE 10 is updated.

The UE 10 and the UE-R 15 that have detected that the D2D radio bearer for the direct communication path between the UE-R 15 and the UE 10 is updated generate the ProSe dedicated bearer (S1212). The UE 10 and the UE-R 15 may notify each other of the D2D RB ID and the D2D QoS.

Here, in a case where the UE 10 receives the bearer updating request from the MME 30 and the UE 10 detects that the EPS radio bearer for the communication path between the eNB 20 and the UE 10 is updated without detecting the ProSe flag, the UE 10 performs the procedure of the related art of updating the EPS radio bearer with the eNB 20. In a case where the UE-R 15 receives the bearer updating request from the MME 30 and the UE-R 15 detects that the EPS radio bearer for the communication path between the eNB 20 and the UE-R 15 is updated without detecting the ProSe flag, the UE-R 15 performs the procedure of the related art of updating the EPS radio bearer with the eNB 20.

In a case where the UE 10 updates the D2D radio bearer between the UE 10 and the UE-R 15 or updates the EPS radio bearer for the communication path between the eNB 20 and the UE 10, the UE 10 transmits the bearer updating response to the MME 30 (S1214). Meanwhile, in a case where the UE-R 15 updates the D2D radio bearer between the UE 10 and the UE-R 15 or updates the EPS radio bearer for the communication path between the eNB 20 and the UE-R 15, the UE-R 15 transmits the bearer updating response to the MME 30 (S1214). By receiving the bearer updating response from the UE 10 and the UE-R 15, the MME 30 detects that the ProSe dedicated bearer is generated between the UE 10 and the UE-R 15 or the RRC reconfiguration is completed between the eNB 20 and the UE-R 15 and between the eNB 20 and the UE 10. Other procedures are the same as those in the method described in the second embodiment.

### [3. Third Embodiment]

Hereinafter, a third embodiment will be described. In the third embodiment, the QoS update process is different. The PGW 50 initiatively starts the QoS update procedure in the first embodiment and the second embodiment, but the HSS initiatively performs the QoS update procedure in the present embodiment.

Since the structure of the mobile communication system of Fig. 1 can be used, the detailed description thereof will be omitted. The structure of the UE, the structure of the UE-R, the structure of the eNB, the structure of the MME, the structure of the SGW 40 and the structure of the PGW 50 in the mobile communication system are also the same as those in the above-described embodiment, and thus, the detailed description thereof will be omitted. The PDN connection establishing procedure in the UE-to-Network Relay is the same as that in the in the above-described embodiment, and thus, the detailed description thereof will be omitted. The HSS 60 has the same structure as that in the mobile communication network 5, and thus, the detailed description thereof will be omitted.

### [3.1 Description of Process]

### [3.1.1 QoS update Procedure]

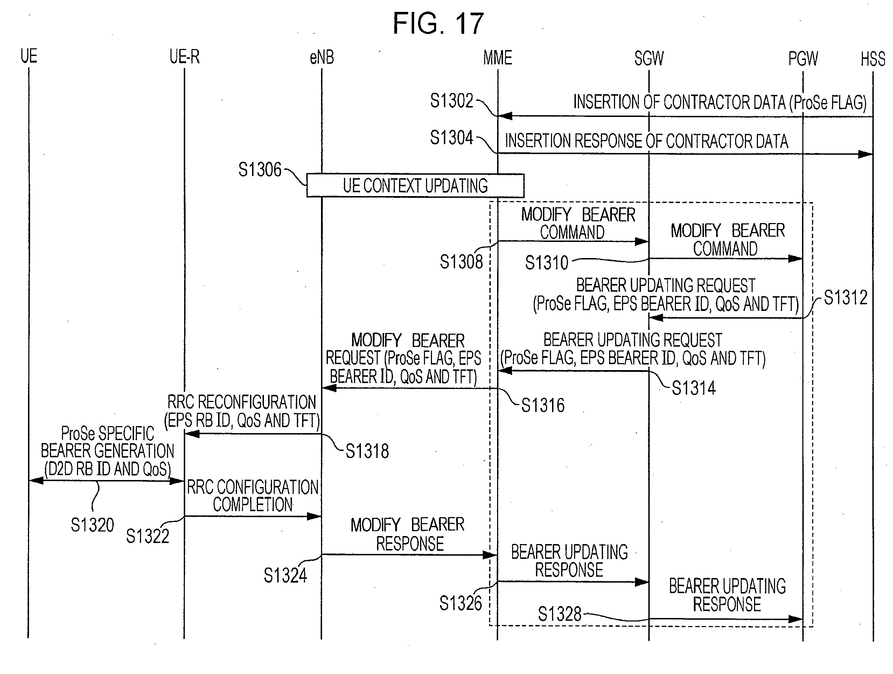

A QoS update procedure according to the present embodiment will be described with reference to Fig. 17. Initially, the HSS 60 detects that contactor data is updated, and notifies the MME 30 of the insertion of the contractor data in the UE-R 15 and the UE 10 (S1302). Meanwhile, the MME 30 detects the insertion of the contractor data from the HSS 60, and replies an insertion response of the contractor data (S1304). The MME 30 starts the QoS update by the insertion of the contractor data from the HSS 60.

Subsequently, the MME 30 updates UE context in the UE-R 15 and the UE 10 based on the updating of the contractor data (S1306). The MME 30 notifies the eNB 20 of the updating of the UE context in the UE-R 15 and the UE 10, and the eNB 20 updates the UE context.

The MME 30 that has received the bearer updating request detects the ProSe flag, and detects that the D2D radio bearer between the UE 10 and the UE-R 15 is generated/updated. Here, in a case where it is difficult to detect the ProSe, the MME 30 detects that the EPS radio bearer between the eNB 20 and the UE-R 15 is generated/updated without generating/updating the D2D radio bearer for the direct communication path between the UE 10 and the UE-R 15.

Thereafter, the MME 30 transmits the Modify bearer command to the SGW 40 (S1308), and the SGW 40 transmits the Modify bearer command to the PGW 50 (S1310). The Modify bearer command may include information indicating that the QoS between the UE 10 and the UE-R 15 is changed.

The PGW 50 that has received the Modify bearer command from the SGW 40 detects that the bearer between the UE 10 and the UE-R 15 is changed. The PGW 50 that has detected that the bearer is changed transmits the bearer updating request to the SGW 40 (S1312), and the SGW 40 transmits the bearer updating request to the MME 30 (S1314). Here, the bearer updating request includes a ProSe flag, an EPS bearer ID, QoS, and a TFT. The ProSe flag is information indicating that the D2D radio bearer between the UE 10 and the UE-R 15 is generated/updated. The ProSe flag may be a ProSe indicator, a Relay indicator, or a ProSe Relay flag as long as information indicating that the D2D radio bearer between the UE 10 and the UE-R 15 is generated/updated is used. The PGW 50 transmits the EPS bearer updating request to the SGW 40, and the SGW 40 transmits the bearer updating request to the MME 30. However, the PGW 50 may direct transmit the bearer updating request to the MME 30.

In a case where the MME 30 detects that the bearer is the bearer (D2D radio bearer) for the direct communication in the ProSe between the UE-R 15 and the UE 10, the procedures from S1308 to S1314 may not be performed.

Subsequently, the MME 30 transmits the Modify bearer request for requesting to update communication quality to the eNB 20 (S13316). Here, the Modify bearer request includes a ProSe flag, an EPS bearer ID, QoS, and a TFT. The ProSe flag is information for generating/updating the D2D radio bearer for the direct communication path between the UE 10 and the UE-R 15. The ProSe flag may be a ProSe indicator, a Relay indicator, or a ProSe Relay flag as long as information indicating that the D2D radio bearer between the UE 10 and the UE-R 15 is generated/updated is used. Here, in a case where the EPS radio bearer for the communication path between the eNB 20 and the UE-R 15 is generated/updated without generating/updating the D2D radio bearer for the direct communication path between the UE 10 and the UE-R 15, the ProSe flag may not be included.

The eNB 20 that has received the Modify bearer request from the MME 30 detects the ProSe flag included in the Modify bearer request, and detects that the D2D radio bearer between the UE-R 15 and the UE 10 is updated without changing the EPS radio bearer between the eNB 20 and the UE-R 15. The eNB 20 detects the TFT and the QoS corresponding to the EPS RB ID. Here, the eNB 20 generates the EPS RB ID from the EPS bearer ID. The eNB 20 adds the EPS bearer ID and the EPS RB ID to the EPS bearer ID and EPS RB ID mapping table 249.

Subsequently, the eNB 20 transmits the RRC reconfiguration notification for requesting to update communication quality in order to update the D2D radio bearer between the UE-R 15 and the UE 10 (S1318). Here, the RRC reconfiguration includes the EPS RB ID and the QoS. The Modify bearer request from the MME 30 includes the ProSe flag, and thus, the ProSe flag and the TFT may be included. The ProSe flag may be a ProSe indicator, a Relay indicator, or a ProSe Relay flag as long as information indicating that the D2D radio bearer for the direct communication path between the UE 10 and the UE-R 15 is generated/updated is used. Here, in a case where the EPS radio bearer for the communication path between the eNB 20 and the UE-R 15 is generated/updated without generating/updating the D2D radio bearer for the direct communication path between the UE 10 and the UE-R 15, the ProSe flag and the TFT may not be included.

The UE-R 15 that has received the RRC reconfiguration from the eNB 20 and has detected the ProSe flag detects that the D2D radio bearer for the direct communication path between the UE-R 15 and the UE 10 is updated without updating the EPS radio bearer with the eNB 20. The UE-R 15 generates the D2D RB ID, and detects the TFT (D2D TFT) and the QoS (D2D QoS) corresponding to the D2D RB ID. Meanwhile, in a case where the UE-R 15 receives the RRC reconfiguration from the eNB 20 and does not detect the ProSe flag, the UE-R 15 detects that the EPS radio bearer for the communication path with the eNB 20 is updated without updating the D2D radio bearer for the direct communication path between the UE-R 15 and the UE 10, and performs the procedure of the related art of updating the EPS radio bearer with the eNB 20.

Thereafter, the UE-R 15 transmits a ProSe dedicated bearer notification message for requesting to update communication quality to the UE 10, and generates a ProSe dedicated bearer with the UE 10 (S1320). Here, the UE-R 15 notifies the UE 10 of the D2D RB ID and the QoS, and the UE 10 manages the D2D RB ID and the D2D QoS. Here, the UE 10 may generate the D2D TFT, and may associate the generated D2D TFT with the D2D RB ID. The generated D2D TFT may be associated with the application. In a case where the UE-R 15 receives the RRC reconfiguration from the eNB 20 and does not detect that the D2D radio bearer for the direct communication path between the UE-R 15 and the UE 10 is updated without detecting the ProSe flag, the present process is not performed.

The UE-R 15 that has generated the ProSe dedicated bearer with the UE 10 transmits the RRC configuration completion notification (S1322). The eNB 20 transmits the Modify bearer response to the MME 30 (S1324). The MME 30 transmits the bearer updating response to the SGW 40, and transmits the bearer updating response (S1326), and the SGW 40 transmits the Modify bearer response to the PGW 50 (S1328). The MME 30 may directly transmit the Modify bearer response to the PGW 50 without transmitting the Modify bearer response to the SGW 40.

Here, in a case where the bearer updating request (S1314) is not received from the SGW 40, the MME 30 may not transmit the bearer updating response (S1326). In a case where the bearer updating request (S1316) is not received from the PGW 50, the SGW 40 may not transmit the bearer updating response (S1328).

Through the above-described procedure, the UE-R 15 and the UE 10 can generate the ProSe dedicated bearer. The dedicated bearer is used in association with a specific application necessary to secure QoS, and thus, it is possible to improve the performance of the application. The UE-R 15 transmits the data from the UE 10 to the mobile communication network (UE-to-network relay), and thus, the UE 10 can be connected to the mobile communication network via the UE-R 15.

As stated above, the mobile communication provider can provide the transmission and reception of data in which the communication source UE and the communication destination UE have secured QoS for the direct communication in the ProSe. The PGW/SGW can manage the (radio) bearer in the direct communication between the UEs. The eNB can manage the radio bearer in the direct communication between the UEs. The communication source UE and the communication destination can manage the radio bearer in the direct communication between the UEs. The relay UE can manage the radio bearer with the UE present outside of coverage in the UE-to-Network relay.

Each of the PGW/SGW, the MME, the eNB, the communication source UE, the communication destination UE and the relay UE which are described above manages the (radio) bearer in the direct communication, and can perform a procedure of securing QoS for the bearer of the direct communication.

The mobile communication network can perform the procedure of securing the QoS for the direct communication in the ProSe with as small a change as possible while providing the transmission and reception of data of the related art.

### [3.1.2 Modification Example 5]

Although it has been described above that the UE 10 is a terminal apparatus present outside of coverage and the UE-R 15 is a terminal apparatus present within coverage, the UE 10 may be a terminal apparatus present within coverage and the UE-R 15 may be a terminal apparatus present within coverage.

In a case where the UE 10 is present within coverage and the UE-R 15 is present within coverage, the eNB 20 may transmit the RRC reconfiguration notification including the ProSe flag, the EPS RB ID, the QoS and the TFT to the UE 10 (S1318). Meanwhile, the UE 10 receives the RRC reconfiguration notification from the eNB 20, and the UE 10 that has detected the ProSe flag detects that the D2D radio bearer for the direct communication path between the UE-R 15 and the UE 10 is updated. The UE 10 that has detected that the D2D radio bearer for the direct communication path between the UE-R 15 and the UE 10 is updated generates the ProSe dedicated bearer with the UE-R 15 (S1320). The UE 10 notifies the UE-R 15 of the D2D RB ID and the D2D QoS.

Here, in a case where the UE 10 receives the RRC reconfiguration from the eNB 20 and detects that the EPS radio bearer for the communication path between the eNB 20 and the UE 10 is updated without detecting the ProSe flag, the UE 10 detects that the EPS radio bearer for the communication path with the eNB 20 is updated, and performs the procedure of the related art of updating the EPS radio bearer with the eNB 20.

In a case where the UE 10 updates the D2D bearer between the UE 10 and the UE-R 15 or updates the EPS radio bearer for the communication path between the eNB 20 and the UE 10, the UE 10 notifies the eNB 20 of the RRC reconfiguration (S1322). Other procedures are the same as those in the method description in the third embodiment.

### [3.1.3 Modification Example 6]

Although it has been described above that the eNB 20 transmits the RRC reconfiguration notification to any one of the UE-R 15 and the UE 10 present within coverage, the eNB 20 may transmit the RRC reconfiguration notification including the ProSe flag, the EPS RB ID, the QoS and the TFT to the UE 10, and may transmit the RRC reconfiguration notification including the ProSe flag, the EPS RB ID, the QoS and the TFT to the UE-R 15 (S1318). The UE 10 receives the RRC reconfiguration notification from the eNB 20, and the UE 10 that has detected the ProSe flag detects that the D2D radio bearer for the direct communication path between the UE-R 15 and the UE 10 is updated. The UE-R 15 receives the RRC reconfiguration notification from the eNB 20, and the UE-R 15 that has detected the ProSe flag detects that the D2D radio bearer for the direct communication path between the UE-R 15 and the UE 10 is updated.

The UE 10 and the UE-R 15 that have detected that the D2D radio bearer for the direct communication path between the UE-R 15 and the UE 10 is updated generate the ProSe dedicated bearer (S1320). The UE 10 and the UE-R 15 may notify each other of the D2D RB ID and the D2D QoS.

Here, in a case where the UE 10 receives the RRC reconfiguration from the eNB 20 and the UE 10 detects that the EPS radio bearer for the communication path between the eNB 20 and the UE 10 is updated without detecting the ProSe flag, the UE 10 performs the procedure of the related art of updating the EPS radio bearer with the eNB 20. In a case where the UE-R 15 receives the RRC reconfiguration from the eNB 20 and the UE-R 15 detects that the EPS radio bearer for the communication path between the eNB 20 and the UE-R 15 is updated without detecting the ProSe flag, the UE-R 15 performs the procedure of the related art of updating the EPS radio bearer with the eNB 20.

In a case where the UE 10 updates the D2D radio bearer between the UE 10 and the UE-R 15 or updates the EPS radio bearer for the communication path between the eNB 20 and the UE 10, the UE 10 notifies the eNB 20 of the RRC configuration completion (S1322). Meanwhile, in a case where the UE-R 15 updates the D2D radio bearer between the UE 10 and the UE-R 15 or updates the EPS radio bearer for the communication path between the eNB 20 and the UE-R 15, the UE-R 15 notifies the eNB 20 of the RRC configuration completion (S1322). By receiving the RRC configuration completion notification from the UE 10 and the UE-R 15, the eNB 20 detects that the ProSe dedicated bearer is generated between the UE 10 and the UE-R 15 or the RRC reconfiguration is completed between the eNB 20 and the UE-R 15 and between the eNB 20 and the UE 10. Other procedures are the same as those in the method described in the third embodiment.

### [4. Fourth Embodiment]

Hereinafter, a fourth embodiment will be described. In the fourth embodiment, the QoS update procedure is different. The PGW 50 initiatively starts the QoS update procedure in the first embodiment and the second embodiment, and the HSS 60 initiatively starts the QoS update procedure in the third embodiment. However, a ProSe Server (or a ProSe Function) initiatively performs the QoS update procedure in the present embodiment.

### [4.1 Outline of Mobile Communication system]

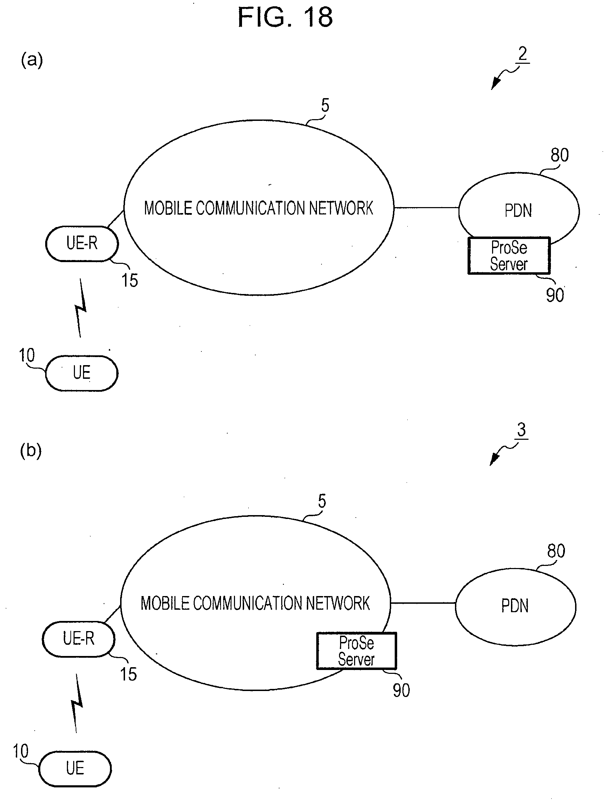

Fig. 18(a) shows the structure of a mobile communication system 2 according to the present embodiment. In Fig. 18(a), the structure in which a ProSe Server 90 is disposed in the PDN 80 is illustrated. Other structures other than the ProSe Server 90 are the same as those in the first embodiment, the second embodiment and the third embodiment. Fig. 18(b) shows a mobile communication system 3 according to the present embodiment. In Fig. 18(b), the structure in which the ProSe Server 90 is disposed in the mobile communication network 5 is illustrated. The ProSe Server 90 may be referred to as a ProSe Function 90 as one function within the MME 30. Other structures of the ProSe Server 90 (or the ProSe Function) are the same as those in the first embodiment, the second embodiment and the third embodiment. In the present embodiment, both the structure of Fig. 18(a) and the structure of Fig. 18(b) may be used.

### [4.2 Apparatus Structure]

Hereinafter, the structure of the ProSe Server 90 will be simply described with reference to the drawings. The UE 10, the UE-R 15, the eNB 20, the MME 30, the SGW 40, the PGW 50, the HSS 60, the PCRF 70 and the PDN 80 have the same structures as those in the first embodiment, and the description thereof will be omitted.

### [4.2.1 Structure of ProSe Server]

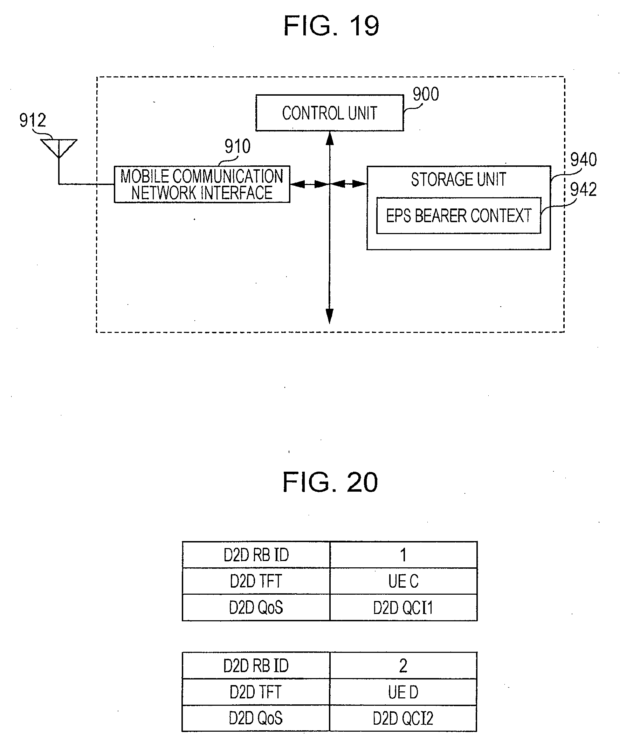

Fig. 19 shows a functional structure of the ProSe Server 90. In the ProSe Server 90, a mobile communication interface 910 and a storage unit 940 are connected to a control unit 900 through a bus.

The control unit 900 is a functional unit for controlling the ProSe Server 90. The control unit 900 realizes various processes by reading various programs stored in the storage unit 940 and executing the read programs.

The mobile communication network interface 910 is a functional unit for allowing the ProSe Server 90 to be connected to the mobile communication network.

The storage unit 940 is a functional unit that stores programs or data required in various operations of the ProSe Server 90. For example, the storage unit 940 is realized using a semiconductor memory or a HDD (Hard Disk Drive). The storage unit 940 stores an EPS bearer context 942.

Fig. 20 shows an example of the EPS bearer context 942. In Fig. 20, the EPS bearer context 942 includes a D2D RB ID, a D2D TFT, and D2D QoS.

The D2D TFT is associated with information regarding an application, a transmission source UE, a transmission destination UE, or the PGW 50, indicates a bearer (D2D RB ID) in which direct communication is performed depending on the information the application, the transmission source UE, or the transmission destination UE, and manages information for selecting connection in a direct communication path.

The D2D RB ID is an identifier for identifying connection in a direct communication path between the UE 10 and the UE-R 15. Here, the D2D RB ID stores an identifier of the D2D radio bearer.

The D2D QoS illustrates QoS for each D2D RB ID. The ProSe Server 90 manages the D2D QoS corresponding to each D2D RB ID between the UE 10 and the UE-R 15.

In Fig. 20, the D2D TFT is a UE C, the D2D RB ID is 1, and the D2D QoS is QCI1, and these items are managed such that in a case where the UE 10 or the UE-R 15 communicates with the UE C, 1 is selected for the D2D RB ID, and the transmission and reception of data between the UE 10 and the UE-R 15 are performed in D2D QCI1.

Meanwhile, the TFT is a UE D, the D2D RB ID is 2, and the D2D QoS is QCI2, and these items are managed such that in a case where the UE 10 or the UE-R 15 performs the transmission and reception of data to and from the UE D, 2 is selected for the D2D RB ID, and the transmission and reception of data between the UE 10 and the UE-R 15 are performed in the D2D QCI2. Here, the TFT includes a UE identifier, but may include information regarding the UE. Not the information regarding the UE but the information regarding the application may be included, and the TFT may be selected depending on the application. The information regarding the UE and the information regarding the application may be included, and the TFT may be complexly selected.

### [4.3 Description of Process]

Since the PDN connection establishing procedure in the UE-to-Network Relay can be similarly used, the detailed description thereof will be omitted.

### [4.3.1 QoS update Procedure]

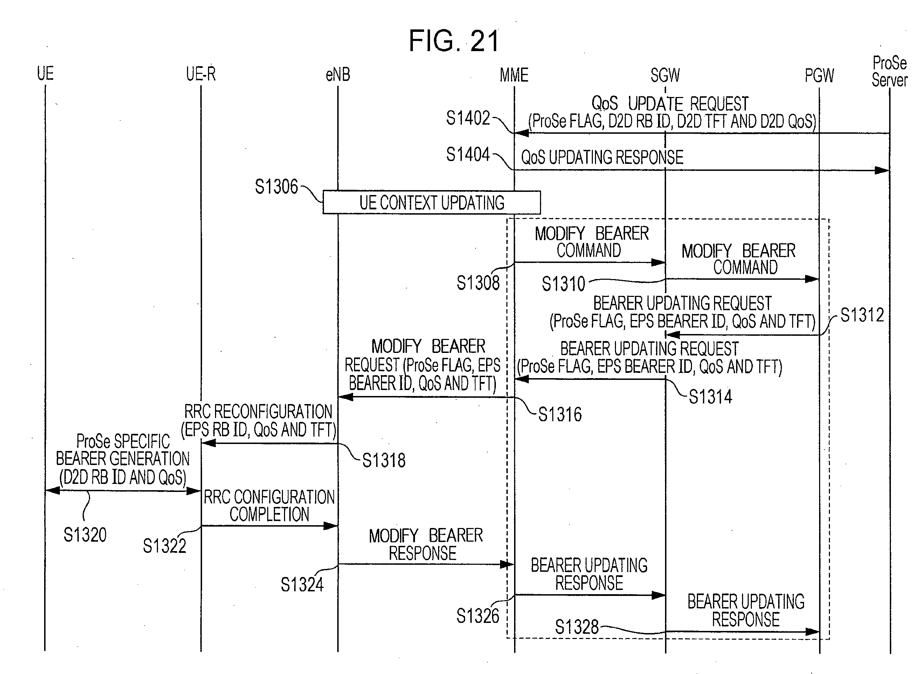

A QoS update procedure according to the present embodiment will be described with reference to Fig. 21. Initially, the ProSe Server 90 detects necessity of updating QoS between the UE 10 and the UE-R 15, and transmits a QoS update request in the UE-R 15 and the UE 10 to the MME 30 (S1402). The ProSe Server 90 adds a ProSe flag, a D2D RB ID, a D2D TFT, and D2D QoS to the QoS update request.

Meanwhile, the MME 30 receives the QoS update request from the ProSe Server 90, and detects the ProSe flag. The MME 30 that has detected the ProSe flag detects that the QoS between the UE 10 and the UE-R 15 is updated. The MME 30 detects the D2D RB ID, the D2D TFT, and D2D QoS.

Meanwhile, the MME 30 replies a QoS update response (S1404). The MME 30 starts to update the QoS by the insertion of the contractor data from the ProSe Server 90.

The following procedures are the same as the procedures of S1306 to S1328 described in the third embodiment, and thus, the description thereof will be omitted. The MME 30 uses the D2D RB ID, the D2D TFT and the D2D QoS from the ProSe Server 90 as the EPS bearer ID, the TFT and the QoS, respectively. The MME 30 may manage mapping information of the D2D RB ID to the EPS bearer ID from the ProSe Server 90, manage mapping information of the D2D TFT and the TFT, and may manage mapping information of the D2D QoS to the QoS.

Through the above-described procedure, the UE-R 15 and the UE 10 can generate the ProSe dedicated bearer. The dedicated bearer is used in association with a specific application necessary to secure QoS, and thus, it is possible to improve the performance of the application. The UE-R 15 transmits the data from the UE 10 to the mobile communication network (UE-to-network relay), and thus, the UE 10 can be connected to the mobile communication network via the UE-R 15.

As stated above, the mobile communication provider can provide the transmission and reception of data in which the communication source UE and the communication destination UE have secured QoS for the direct communication in the ProSe. The PGW/SGW can manage the (radio) bearer in the direct communication between the UEs. The eNB can manage the radio bearer in the direct communication between the UEs. The communication source UE and the communication destination can manage the radio bearer in the direct communication between the UEs. The relay UE can manage the radio bearer with the UE present outside of coverage in the UE-to-Network relay.

Each of the PGW/SGW, the MME, the eNB, the communication source UE, the communication destination UE and the relay UE which are described above manages the (radio) bearer in the direct communication, and can perform a procedure of securing QoS for the bearer of the direct communication.

The mobile communication network can perform the procedure of securing the QoS for the direct communication in the ProSe with as small a change as possible while providing the transmission and reception of data of the

### related art.

### [5. Modification Example]

Although the embodiments of the present invention have been described with reference to the drawings, the specific structure is not limited to these embodiments, and designs without departing from the gist of the present invention are included in the scope of the claims.

The programs which run on the apparatuses according to the present embodiments may be programs which control a CPU (programs causing a computer to function) such that the functions of the above-described embodiments are implemented. The information handled by these apparatuses is temporarily stored in a temporary storage device (for example, a RAM) during the process, and then is stored in a storage device of HDD or various ROMs. The information is read, corrected, and written by the CPU if necessary.

Here, as a recording medium that stores the programs, any one of a semiconductor medium (for example, ROM, or nonvolatile memory card), an optical recording medium and a magneto-optical recording medium (for example, digital versatile disc (DVD), magneto optical disc (MO), mini disc (MD), compact disc (CD), or BD), or a magnetic recording medium (for example, magnetic tape, or flexible disc) may be used. The functions of the present invention may be realized by performing the process in cooperation with other application programs or an operating system based on the instruction of the program, in addition to realizing the functions of the aforementioned embodiments by executing the loaded program.

When the programs are distributed on the market, the programs may be distributed by being stored in a portable recording medium, or may be transmitted to a server computer connected via a network such as the Internet. In this case, a storage device of the server computer may be included in the present invention.

Some or all of the apparatuses used in the aforementioned embodiments may be realized as large scale integration (LSIs) which are typical integrated circuits. Each functional block of each apparatus may be individually integrated into a chip, or some or all of the functional blocks may be integrated into a chip. A method for achieving the integrated circuit is not limited to the LSI, but may be realized by a dedicated circuit or a general-purpose processor. In addition, in a case where a technique for achieving an integrated circuit which replaces the LSI technique will be developed with the progress of a semiconductor technique, the integrated circuit manufactured by the developed technique can also be used. Reference Signs List

- 1: MOBILE COMMUNICATION SYSTEM
- 5: MOBILE COMMUNICATION NETWORK
- 7: CORE NETWORK
- 9: ACCESS NETWORK
- 10: UE
- 15: UE-R
- 20: eNB
- 30: MME
- 40: SGW
- 50: PGW
- 60: HSS
- 70: PCRF
- 80: PDN
- 90: ProSe Server

## Claims

1. A mobile communication system that includes a packet data network gateway (PGW), a control apparatus, a base station apparatus, a relay terminal apparatus, and a terminal apparatus positioned in the proximity of the relay terminal apparatus, in which a communication path is established between the base station apparatus and the relay terminal apparatus, and in which a direct communication path is established between the relay terminal apparatus and the terminal apparatus,
wherein the PGW is configured to transmit a first request message for requesting to update communication quality, which does not include information indicating direct communication, in a case where there is a request to update communication quality for the communication path between the base station apparatus and the relay terminal apparatus, and transmit a first request message which includes the information indicating the direct communication in a case where there is a request to update communication quality for the direct communication path between the relay terminal apparatus and the terminal apparatus,
the control apparatus is configured to
receive the first request message,
detect that there is a request to update the communication quality for the communication path between the base station apparatus and the relay terminal apparatus, and transmit a second request message for requesting to update communication quality, which does not include the information indicating the direct communication, to the base station apparatus, in a case where the information indicating the direct communication is not included in the request message, and
detect that there is a request to update the communication quality for the direct communication path between the relay terminal apparatus and the terminal apparatus, and transmit a second request message for requesting to update communication quality, which includes the information indicating the direct communication, to the base station apparatus, in a case where the information indicating the direct communication is included in the first request message,
the base station apparatus is configured to receive the second request message,
detect that there is a request to update the communication quality for the communication path between the base station apparatus and the relay terminal apparatus, and transmit a third request message for requesting to update communication quality, which does not include the information indicating the direct communication, to the relay terminal apparatus, in a case where the information indicating the direct communication is not included in the second request message, and
detect that there is a request to update the communication quality for the direct communication path between the relay terminal apparatus and the terminal apparatus, and transmit a third request message for requesting to update communication quality, which includes the information indicating the direct communication and information for selecting connection in a communication path, to the relay terminal apparatus, in a case where the information indicating the direct communication is included in the second request message, and
the relay terminal apparatus is configured to receive the third request message,
detect that there is a request to update the communication quality for the communication path between the base station apparatus and the relay terminal apparatus, and update the communication quality for the communication path with the base station apparatus, in a case where the information indicating the direct communication is not included in the third request message, and
detect that there is a request to update the communication quality for the direct communication path between the relay terminal apparatus and the terminal apparatus, and transmit a fourth request message for requesting to update communication quality, which includes an identifier for identifying connection in a direct communication path and information regarding communication quality, to the terminal apparatus, in a case where the information indicating the direct communication is included in the third request message.

2. A relay terminal apparatus in a mobile communication system that includes a packet data network gateway (PGW), a control apparatus, a base station apparatus, the relay terminal apparatus, and a terminal apparatus positioned in the proximity of the relay terminal apparatus, and in which a direct communication path is established between the relay terminal apparatus and the terminal apparatus,
wherein the relay terminal apparatus is configured to receive a request message for requesting to update the communication quality from the base station apparatus,
detect that there is a request to update communication quality for a communication path between the base station apparatus and the relay terminal apparatus, and update the communication quality for the communication path with the base station apparatus, in a case where information indicating direct communication is not included in the request message, and
detect that there is a request to update communication quality for the direct communication path between the relay terminal apparatus and the terminal apparatus, and transmit a request message for requesting to update communication quality, which includes an identifier for identifying connection in a direct communication path and information regarding communication quality, to the terminal apparatus, in a case where the information indicating the direct communication is included in the request message.

3. A terminal apparatus in a mobile communication system that includes a packet data network gateway (PGW), a control apparatus, a base station apparatus, a relay terminal apparatus, and the terminal apparatus positioned in the proximity of the relay terminal apparatus, and in which a direct communication path is established between the relay terminal apparatus and the terminal apparatus, the terminal apparatus configured to:
receive a request message for requesting to update communication quality, which includes an identifier for identifying connection in a direct communication path and information indicating communication quality, from the relay terminal apparatus; and
update communication quality for the direct communication path with the terminal apparatus based on the request message.

4. A base station apparatus in a mobile communication system that includes a packet data network gateway (PGW), a control apparatus, the base station apparatus, a relay terminal apparatus, and a terminal apparatus positioned in the proximity of the relay terminal apparatus, and in which a direct communication path is established between the relay terminal apparatus and the terminal apparatus, the base station apparatus configured to:
receive a request message for requesting to update communication quality from the control apparatus;
detect that there is a request to update communication quality for a communication path between the base station apparatus and the relay terminal apparatus, and transmit a request message for requesting to update communication quality, which does not include the information indicating the direct communication, to the relay terminal apparatus, in a case where information indicating direct communication is not included in the request message; and
detect that there is a request to update communication quality for the direct communication path between the relay terminal apparatus and the terminal apparatus, and transmit a request message for requesting to update communication quality, which includes the information indicating the direct communication and information for selecting communication quality, and includes the information indicating the direct communication, and an identifier for identifying connection in a direct communication path and information for selecting connection in a communication path, to the relay terminal apparatus, in a case where the information indicating the direct communication is included in the request message.

5. A control apparatus in a mobile communication system that includes a packet data network gateway (PGW), the control apparatus, a base station apparatus, a relay terminal apparatus, and a terminal apparatus positioned in the proximity of the relay terminal apparatus, and in which a direct communication path is established between the relay terminal apparatus and the terminal apparatus, the control apparatus configured to:
receive a request message for requesting to update communication quality from the PGW;
detect that there is a request to update communication quality for a communication path between the base station apparatus and the relay terminal apparatus, and transmit a request message for requesting to update communication quality, which does not include the information indicating the direct communication, to the base station apparatus, in a case where information indicating direct communication is not included in the request message; and
detect that there is a request to update communication quality for the direct communication path between the relay terminal apparatus and the terminal apparatus, and transmit a request message for requesting to update communication quality, which includes the information indicating the direct communication, to the base station apparatus, in a case where the information indicating the direct communication is included in the request message.

6. A communication control method for causing a relay terminal apparatus to update communication quality of the relay terminal apparatus and a terminal apparatus positioned in the proximity of the relay terminal apparatus, the method comprising:
a step of causing the relay terminal apparatus to receive a request message for requesting to update communication quality from a base station apparatus;
a step of causing the relay terminal apparatus to detect that there is a request to update communication quality for a communication path between the base station apparatus and the relay terminal apparatus, and to update the communication quality for the communication path with the base station apparatus, in a case where information indicating direct communication is not included in the request message; and
a step of causing the relay terminal apparatus to detect that there is a request to update communication quality for the direct communication path between the relay terminal apparatus and the terminal apparatus, and to transmit a request message for requesting to update communication quality, which includes the information indicating the direct communication, an identifier for identifying connection in a direct communication path and information for selecting connection in a communication path, to the terminal apparatus, in a case where the information indicating the direct communication is included in the request message.

7. A communication control method for causing a terminal apparatus to update communication quality of the terminal apparatus and a relay terminal apparatus positioned in the proximity of the terminal apparatus, the method comprising:
a step of receiving a request message for requesting to update communication quality, which include an identifier for identifying connection in a direct communication path and information indicating communication quality, from the relay terminal apparatus; and
a step of updating communication quality for a direct communication path with the terminal apparatus based on the request message.

8. A communication control method for causing a base station apparatus to update communication quality of a terminal apparatus and a relay terminal apparatus positioned in the proximity of the terminal apparatus, the method comprising:
a step of causing the base station apparatus to receive a request message for requesting to update communication quality from a control apparatus;
a step of causing the base station apparatus to detect that there is a request to update communication quality for a communication path between the base station apparatus and the relay terminal apparatus, and to transmit a request message for requesting to update communication quality, which does not include the information indicating the direct communication, to the relay terminal apparatus, in a case where information indicating direct communication is not included in the request message; and
a step of causing the base station apparatus to detect that there is a request to update communication quality for a direct communication path between the relay terminal apparatus and the terminal apparatus, and to transmit a request message for requesting to update communication quality, which includes the information indicating the direct communication, an identifier for identifying connection in a direct communication path and information for selecting connection in a communication path, to the relay terminal apparatus, in a case where the information indicating the direct communication is included in the request message.

9. A communication control method for causing a control apparatus to update communication quality of a terminal apparatus and a relay terminal apparatus positioned in the proximity of the terminal apparatus, the method comprising:
a step of causing the control apparatus to receive a request message for requesting to update communication quality from a PGW;
a step of causing the control apparatus to detect that there is a request to update communication quality for a communication path between a base station apparatus and the relay terminal apparatus, and to transmit a request message for requesting to update communication quality, which does not include information indicating direct communication, to the base station apparatus, in a case where the information indicating the direct communication is not included in the request message; and
a step of causing the control apparatus to detect that there is a request to update communication quality for a direct communication path between the relay terminal apparatus and the terminal apparatus, and to transmit a request message for requesting to update communication quality, which includes the information indicating the direct communication, to the base station apparatus, in a case where the information indicating the direct communication is included in the request message.

10. A mobile communication system that includes a packet data network gateway (PGW), a control apparatus, a base station apparatus, a relay terminal apparatus, and a terminal apparatus positioned in the proximity of the relay terminal apparatus, in which a communication path is established between the base station apparatus and the relay terminal apparatus, and in which a direct communication path is established between the relay terminal apparatus and the terminal apparatus,
wherein the PGW is configured to transmit a first request message for requesting to update communication quality, which does not include information indicating direct communication, in a case where there is a request to update communication quality for the communication path between the base station apparatus and the relay terminal apparatus, and transmit a first request message for requesting to update communication quality, which includes the information indicating the direct communication, in a case where there is a request to update communication quality for the direct communication path between the relay terminal apparatus and the terminal apparatus,
the control apparatus is configured to receive the first request message, and
detect that there is a request to update communication quality for the direct communication path between the relay terminal apparatus and the terminal apparatus, and transmit a second request message for requesting to update communication quality, which includes the information indicating the direct communication, an identifier for identifying connection in a direct communication path, information regarding communication quality and information for selecting connection in a communication path, to the relay terminal apparatus, in a case where the information indicating the direct communication is included in the request message, and
the relay terminal apparatus is configured to receive the second request message,
detect that there is a request to update communication quality for the communication path between the base station apparatus and the relay terminal apparatus, and update the communication quality for the communication path with the base station apparatus, in a case where the information indicating the direct communication is not included in the second request message, and
detect that there is a request to update communication quality for the direct communication path between the relay terminal apparatus and the terminal apparatus, and transmit a request message for requesting to update communication quality, which includes an identifier for identifying connection in a direct communication path and information regarding communication quality, to the terminal apparatus, in a case where the information indicating the direct communication is included in the second request message.

11. A relay terminal apparatus in a mobile communication system that includes a packet data network gateway (PGW), a control apparatus, a base station apparatus, the relay terminal apparatus, and a terminal apparatus positioned in the proximity of the relay terminal apparatus, and in which a direct communication path is established between the relay terminal apparatus and the terminal apparatus, the relay terminal apparatus configured to:
receive a request message for requesting to update communication quality from the control apparatus;
detect that there is a request to update communication quality for a communication path between the base station apparatus and the relay terminal apparatus, and update the communication quality for the communication path with the base station apparatus, in a case where information indicating direct communication is not included in the request message; and
detect that there is a request to update communication quality for the direct communication path between the relay terminal apparatus and the terminal apparatus, and transmit a request message for requesting to update communication quality, which includes an identifier for identifying connection in a direct communication path and information regarding communication quality, to the terminal apparatus, in a case where the information indicating the direct communication is included in the request message.

12. A control apparatus in a mobile communication system that includes a packet data network gateway (PGW), the control apparatus, a base station apparatus, a relay terminal apparatus, and a terminal apparatus positioned in the proximity of the relay terminal apparatus, and in which a direct communication path is established between the relay terminal apparatus and the terminal apparatus, the control apparatus configured to:
receive a request message for requesting to update communication quality from the PGW;
detect that there is a request to update communication quality for a communication path between the base station apparatus and the relay terminal apparatus, and transmit a request message for requesting to update communication quality, which does not include information indicating direct communication, to the relay terminal apparatus, in a case where the information indicating the direct communication is not included in the request message; and
detect that there is a request to update communication quality for the direct communication path between the relay terminal apparatus and the terminal apparatus, and transmit a request message for requesting to update communication quality, which includes the information indicating the direct communication, to the terminal apparatus, in a case where the information indicating the direct communication is included in the request message.

13. A communication control method for causing a relay terminal apparatus to update communication quality of the relay terminal apparatus and a terminal apparatus positioned in the proximity of the relay terminal apparatus, the method comprising:
a step of causing the relay terminal apparatus to receive a request message for requesting to update communication quality from a control apparatus;
a step of causing the relay terminal apparatus to detect that there is a request to update communication quality for a communication path between a base station apparatus and the relay terminal apparatus, and to update the communication quality for the communication path with the base station apparatus, in a case where information indicating direct communication is not included in the request message; and
a step of causing the relay terminal apparatus to detect that there is a request to update communication quality for a direct communication path between the relay terminal apparatus and the terminal apparatus, and to transmit a request message for requesting to update communication quality, which includes an identifier for identifying connection in a direct communication path and information regarding communication quality, to the terminal apparatus, in a case where the information indicating the direct communication is included in the request message.

14. A communication control method for causing a control apparatus to update communication quality of a terminal apparatus and a relay terminal apparatus positioned in the proximity of the terminal apparatus, the method comprising:
a step of causing the control apparatus to receive a request message for requesting to update communication quality from a PGW;
a step of causing the control apparatus to detect that there is a request to update communication quality for a communication path between a base station apparatus and the relay terminal apparatus, and to transmit a request message for requesting to update communication quality, which does not include information indicating direct communication, to the relay terminal apparatus, in a case where the information indicating the direct communication is not included in the request message; and
a step of causing the control apparatus to detect that there is a request to update communication quality for a direct communication path between the relay terminal apparatus and the terminal apparatus, and to transmit a request message for requesting to update communication quality, which includes the information indicating the direct communication, to the base station apparatus, in a case where the information indicating the direct communication is included in the request message.

15. A mobile communication system that includes an HSS, a control apparatus, a base station apparatus, a relay terminal apparatus, and a terminal apparatus positioned in the proximity of the relay terminal apparatus, in which a communication path is established between the base station apparatus and the relay terminal apparatus, and in which a direct communication path is established between the relay terminal apparatus and the terminal apparatus,
wherein the HSS is configured to transmit a notification message for notifying of the insertion of contractor data,
the control apparatus is configured to receive the notification message,
detect that there is a request to update communication quality for the communication path between the base station apparatus and the relay terminal apparatus, and transmit a first request message for requesting to update communication quality, which does not include the information indicating the direct communication, to the base station apparatus, in a case where information indicating direct communication is not included in the notification message, and
detect that there is a request to update communication quality for the direct communication path between the relay terminal apparatus and the terminal apparatus, and transmit a first request message for requesting to update communication quality, which includes the information indicating the direct communication, to the base station apparatus, in a case where the information indicating the direct communication is included in the notification message,
the base station apparatus is configured to receive the first request message,
detect that there is a request to update communication quality for the communication path between the base station apparatus and the relay terminal apparatus, and transmit a second request message for requesting to update communication quality, which does not include the information indicating the direct communication, to the relay terminal apparatus, in a case where the information indicating the direct communication is not included in the first request message, and
detect that there is a request to update communication quality for the direct communication path between the relay terminal apparatus and the terminal apparatus, and transmit a second request message for requesting to update communication quality, which includes the information indicating the direct communication, an identifier for identifying connection in a direct communication path and information for selecting connection in a communication path, to the relay terminal apparatus, in a case where the information indicating the direct communication is included in the first request message, and
the relay terminal apparatus is configured to receive the second request message,
detect that there is a request to update communication quality for the communication path between the base station apparatus and the relay terminal apparatus, and update the communication quality for the communication path with the base station apparatus, in a case where the information indicating the direct communication is not included in the second request message, and
detect that there is a request to update communication quality for the direct communication path between the relay terminal apparatus and the terminal apparatus, and transmit a third request message for requesting to update communication quality, which includes an identifier for identifying connection in a direct communication path and information regarding communication quality, to the terminal apparatus, in a case where the information indicating the direct communication is included in the second request message.

16. A control apparatus in a mobile communication system that includes an HSS, the control apparatus, a base station apparatus, a relay terminal apparatus, and a terminal apparatus positioned in the proximity of the relay terminal apparatus, and in which a direct communication path is established between the relay terminal apparatus and the terminal apparatus, the control apparatus configured to:
receive a request message for requesting to update communication quality from the HSS;
detect that there is a request to update communication quality for a communication path between the base station apparatus and the relay terminal apparatus, and transmit a request message for requesting to update communication quality, which does not include information indicating direct communication, to the base station apparatus, in a case where the information indicating the direct communication is not included in the request message; and
detect that there is a request to update communication quality for the direct communication path between the relay terminal apparatus and the terminal apparatus, and transmit a request message for requesting to update communication quality, which includes the information indicating the direct communication, to the base station apparatus, in a case where the information indicating the direct communication is included in the request message.

17. A communication control method for causing a control apparatus to update communication quality of a terminal apparatus and a relay terminal apparatus positioned in the proximity of the terminal apparatus, the method comprising:
a step of causing the control apparatus to receive a request message for requesting to update communication quality from an HSS;
a step of causing the control apparatus to detect that there is a request to update communication quality for a communication path between a base station apparatus and the relay terminal apparatus, and to transmit a request message for requesting to update communication quality, which does not include information indicating direct communication, to the relay terminal apparatus, in a case where the information indicating the direct communication is not included in the request message; and
a step of causing the control apparatus to detect that there is a request to update communication quality for a direct communication path between the relay terminal apparatus and the terminal apparatus, and to transmit a request message for requesting to update communication quality, which includes the information indicating the direct communication, to the base station apparatus, in a case where the information indicating the direct communication is included in the request message.

18. A mobile communication system that includes a server apparatus for providing a direct communication service, a control apparatus, a base station apparatus, a relay terminal apparatus, and a terminal apparatus positioned in the proximity of the relay terminal apparatus, in which a communication path is established between the base station apparatus and the relay terminal apparatus, and in which a direct communication path is established between the relay terminal apparatus and the terminal apparatus,
wherein the server apparatus is configured to transmit a first request message for requesting to update communication quality,
the control apparatus is configured to
receive the first request message, and
detect that there is a request to update communication quality for the direct communication path between the relay terminal apparatus and the terminal apparatus, and transmit a second request message for requesting to update communication quality, which includes information indicating direct communication, to the base station apparatus,
the base station apparatus is configured to receive the second request message,
detect that there is a request to update communication quality for the communication path between the base station apparatus and the relay terminal apparatus, and transmit a third request message for requesting to update communication quality, which does not include the information indicating the direct communication, to the relay terminal apparatus, in a case where the information indicating the direct communication is not included in the second request message, and
detect that there is a request to update communication quality for the direct communication path between the relay terminal apparatus and the terminal apparatus, and transmit a third request message for requesting to update communication quality, which includes the information indicating the direct communication and information for selecting connection in a communication path, to the relay terminal apparatus, in a case where the information indicating the direct communication is included in the second request message, and
the relay terminal apparatus is configured to receive the third request message,
detect that there is a request to update communication quality for the communication path between the base station apparatus and the relay terminal apparatus, and update the communication quality for the communication path with the base station apparatus, in a case where the information indicating the direct communication is not included in the third request message, and
detect that there is a request to update communication quality for the direct communication path between the relay terminal apparatus and the terminal apparatus, and transmit a request message for requesting to update communication quality, which includes an identifier for identifying connection in a direct communication path and information regarding communication quality, to the terminal apparatus, in a case where the information indicating the direct communication is included in the third request message.

19. A control apparatus in a mobile communication system that includes a server apparatus for providing a direct communication service, the control apparatus, a base station apparatus, a relay terminal apparatus, and a terminal apparatus positioned in the proximity of the relay terminal apparatus, and in which a direct communication path is established between the relay terminal apparatus and the terminal apparatus, the control apparatus configured to:
receive a request message for requesting to update communication quality from the server apparatus; and
detect that there is a request to update communication quality for the direct communication path between the relay terminal apparatus and the terminal apparatus, and transmit a request message for requesting to update communication quality, which includes information indicating direct communication, to the base station apparatus.

20. A server apparatus in a mobile communication system that includes the server apparatus for providing a direct communication service, a control apparatus, a base station apparatus, a relay terminal apparatus, and a terminal apparatus positioned in the proximity of the relay terminal apparatus, and in which a direct communication path is established between the relay terminal apparatus and the terminal apparatus, the server apparatus configured to:
transmit a request message for requesting to update communication quality from the control server in order to update communication quality.

21. A communication control method for causing a control apparatus to update communication quality of a terminal apparatus and a relay terminal apparatus positioned in the proximity of the terminal apparatus, the method comprising:
a step of causing the control apparatus to receive a request message for requesting to update communication quality from a server apparatus; and
a step of causing the control apparatus to detect that there is a request to update communication quality for a direct communication path between the relay terminal apparatus and the terminal apparatus, and to transmit a request message for requesting to update communication quality, which includes information indicating direct communication, to a base station apparatus.

22. A communication control method for causing a server apparatus for providing a direct communication service to update communication quality of a terminal apparatus and a relay terminal apparatus positioned in the proximity of the terminal apparatus, the method comprising:
a step of causing the server apparatus to detect that it is necessary to update communication quality; and
a step of causing the server apparatus to transmit a request message for requesting to update communication quality, which includes information indicating direct communication, to a control apparatus.
